# EUROPEAN PATENT SPECIFICATION

(11) **EP 3 686 577 B1**
(45) Date of publication and mention of the grant of the patent: **06.07.2022**
(21) Application number: 18858337.1
(22) Date of filing: 19.09.2018
(51) Int. Cl.: G01N 21/3581, G01N 21/3563, G01N 21/21, B42D 25/30, G07D 7/06, G01N 21/84, G01N 21/86

(54) **ELECTROMAGNETIC WAVE DETECTION APPARATUS, MEDIUM HANDLING APPARATUS, AND MEDIUM INSPECTION APPARATUS**
DETEKTIONSVORRICHTUNG FÜR ELEKTROMAGNETISCHE WELLEN, MEDIENHANDHABUNGSVORRICHTUNG UND MEDIENINSPEKTIONSVORRICHTUNG
APPAREIL DE DETECTION D'ONDES ELECTROMAGNETIQUES, APPAREIL DE GESTION DES MEDIAS ET APPAREIL D'INSPECTION DES MEDIAS

(30) Priority: 22.09.2017 JP 2017181973; 22.09.2017 JP 2017181986; 10.04.2018 JP 2018075692
(43) Date of publication of application: 29.07.2020
(73) Proprietor: Glory Ltd., Hyogo 670-8567 (JP)
(72) Inventor: MUTA, Keitaro, Himeji-shi, Hyogo 670-8567 (JP); NAKASHIMA, Toru, Himeji-shi, Hyogo 670-8567 (JP)
(74) Representative: SSM Sandmair
(86) International application number: PCT/JP2018/034594
(87) International publication number: WO 2019/059214

(56) References cited:
- WO-A1-2016/031181
- JP-A- H0 944 633
- JP-A- H02 109 191
- JP-A- 2011 034 172
- JP-A- 2011 034 172
- JP-A- 2011 034 173
- JP-A- 2011 034 173
- US-A1- 2014 098 360

## Description

### TECHNICAL FIELD

The present invention relates to: an electromagnetic wave detection apparatus, a medium handling apparatus and a medium inspection apparatus each including the electromagnetic wave detection apparatus.

### BACKGROUND ART

Conventionally, techniques of inspecting characteristics such as materials and structures of objects by irradiating the objects with terahertz electromagnetic waves have been used in various fields. For example, Patent Literature (PTL 1) discloses an inspection apparatus that generates and detects a terahertz electromagnetic wave by using a plurality of photoconductive elements arranged in an array. In this inspection apparatus, a terahertz electromagnetic wave generated by generation-side photoconductive elements is condensed by a parabolic mirror and applied to an object to be inspected. Then, the terahertz electromagnetic wave reflected by the object is condensed by another parabolic mirror and detected by detection-side photoconductive elements. Meanwhile, Patent Literature 2 (PTL 2) discloses an apparatus that applies a terahertz electromagnetic wave to an object and detects the terahertz electromagnetic wave transmitted through the object.

Patent Literature 3 (PTL 3) describes a security device wherein a bank note B is conveyed on a conveying path 202. The bank note B is irradiated with terahertz light having a predetermined wavelength by a terahertz light sensor 26. The reflected terahertz light reflected from the security device is received. The terahertz light sensor includes: a first transmitter 268; a second transmitter 269; a first receiver 271; and a second receiver 272. By comparing light amount of the terahertz light received by each receiver 271, 272 with predetermined light amount, the authenticity of the security device of the bank note B can be determined.

Patent literature 4 (PTL 4) describes a device which is similar to the device described in PTL 3.

### CITATION LIST

### [PATENT LITERATURE]

[PTL 1] Japanese Patent No. 5144175
[PTL 2] WO2013/046249
[PTL 3] JP2011034172 A
[PTL 4] JP2011034173 A

### SUMMARY OF THE INVENTION

### PROBLEMS TO BE SOLVED BY THE INVENTION

In the aforementioned conventional arts, however, it sometimes takes time to inspect the characteristics of the object. For example, when it is determined whether or not a transmissivity varies depending on the polarization direction of a terahertz electromagnetic wave to be applied, firstly, a transmissivity of a terahertz electromagnetic wave having a polarization direction in a predetermined direction needs to be measured, and thereafter, a transmissivity of a terahertz electromagnetic wave having a different polarization direction needs to be measured.

The present invention is made to solve the problems in the conventional arts, and an object of the present invention is to provide an electromagnetic wave detection apparatus, a medium handling apparatus, and a medium inspection apparatus which are able to easily detect characteristics of an object with respect to terahertz electromagnetic waves having different polarization directions.

### SOLUTION TO THE PROBLEMS

In order to solve the above problems and achieve the above object, the present invention provides an electromagnetic wave detection apparatus as defined in appended independent claim 1.

In the above configuration, the first detector and the second detector may be disposed at different positions in a width direction of the transport path.

In the above configuration, the electromagnetic wave detection apparatus may include a plurality of the first detectors and a plurality of the second detectors.

In the above configuration, the first detectors and the second detectors may be alternately arrayed in a width direction of the transport path.

An embodiment in accordance with the present invention provides a medium handling apparatus as defined in appended claim 15. Another embodiment in accordance with the present invention provides a medium inspection apparatus as defined in appended claim 14.

Further preferred embodiments in accordance with the present invention are defined in appended claims 2-13.

### ADVANTAGEOUS EFFECTS OF THE INVENTION

According to the present invention, characteristics of an object with respect to two kinds of terahertz electromagnetic waves having different polarization directions can be obtained through a single measurement.

### BRIEF DESCRIPTION OF THE DRAWINGS

[FIG. 1] FIG. 1 is a block diagram showing a schematic configuration of an electromagnetic wave detection apparatus including an electromagnetic wave transmitter and an electromagnetic wave receiver.
[FIG. 2] FIG. 2 is a schematic cross-sectional view showing the configurations of the electromagnetic wave transmitter and the electromagnetic wave receiver as viewed from the lateral side.
[FIG. 3] FIG. 3 is an external view showing an example of a window unit.
[FIG. 4] FIG. 4 is an external view showing an example of a condenser unit in which ellipsoidal mirrors are formed in an array.
[FIG. 5] FIG. 5 is a schematic diagram showing the electromagnetic wave transmitter and the electromagnetic wave receiver as viewed from above.
[FIG. 6] FIG. 6 illustrates the correspondence between the electromagnetic wave transmitter and the electromagnetic wave receiver.
[FIG. 7] FIG. 7 illustrates an example of frequency characteristics against transmissivity obtained when a terahertz electromagnetic wave is applied to a region where split ring resonators (SRRs) are arranged.
[FIG. 8] FIG. 8 illustrates an example of inspection of transmission characteristics of a terahertz electromagnetic wave.
[FIG. 9] FIG. 9 illustrates another example of inspection of transmission characteristics of a terahertz electromagnetic wave.
[FIG. 10] FIG. 10 illustrates still another example of inspection of transmission characteristics of a terahertz electromagnetic wave.
[FIG. 11] FIG. 11 is a block diagram showing a schematic configuration of an authentication apparatus.
[FIG. 12] FIG. 12 illustrates a ratio of transmissivities used for recognition of a medium.
[FIG. 13] FIGS. 13A to 13C illustrate examples of the configuration of the electromagnetic wave detection apparatus which do not fall within the scope of the appended claims.
[FIG. 14] FIG. 14 is a schematic cross-sectional view showing an example of a configuration of an electromagnetic wave detection apparatus that detects reflection characteristics of a terahertz electromagnetic wave.

### DESCRIPTION OF EMBODIMENTS

An electromagnetic wave detection apparatus, a medium handling apparatus, and a medium inspection apparatus according to the present invention will be described below in detail with reference to the accompanying drawings. For example, terahertz electromagnetic wave generation method and detection method performed by photoconductive elements using laser light emitted from a femtosecond laser have been known as conventional arts, like Patent Literatures described as background arts. Therefore, detailed description for generation and detection of terahertz electromagnetic waves will be omitted. Regarding the electromagnetic wave detection apparatus according to the present embodiment, a configuration for applying a terahertz electromagnetic wave emitted from a transmitter-side element to a medium, and detecting the terahertz electromagnetic wave by a reception-side element, will be mainly described.

In the present embodiment, the electromagnetic wave detection apparatus is used for detecting characteristics of a sheet-like medium such as a banknote, a check, or a coupon when a terahertz electromagnetic wave is applied to the medium. The sheet-like medium whose characteristics are to be detected has a resonator structure in which multiple resonators for terahertz electromagnetic waves are arrayed. The electromagnetic wave detection apparatus applies a polarized terahertz electromagnetic wave to the sheet-like medium, and detects a transmitted or reflected terahertz electromagnetic wave. When the terahertz electromagnetic wave is applied to the sheet-like medium, a transmissivity and a reflectivity of the terahertz electromagnetic wave changes, according to the configuration of the resonator structure, in a region where the resonator structure is present. This change is detected as characteristics of the sheet-like medium to be used as a security feature for determining authenticity of the sheet-like medium. The resonator structure may be adhered to the sheet-like medium or may be directly formed on the sheet-like medium. Hereinafter, the present embodiment will be described in detail for a case where characteristics of a sheet-like medium (hereinafter, simply referred to as "medium") are detected based on a transmissivity of a terahertz electromagnetic wave.

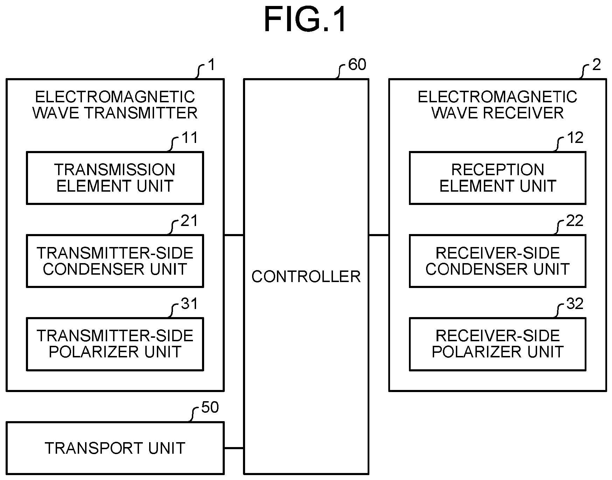

FIG. 1 is a block diagram schematically showing the configuration of an electromagnetic wave detection apparatus including an electromagnetic wave transmitter 1 (electromagnetic wave sensor) and an electromagnetic wave receiver 2 (electromagnetic wave sensor). As shown in FIG. 1, the electromagnetic wave detection apparatus includes: a transport unit 50 that transports a medium in the apparatus; the electromagnetic wave transmitter 1 that transmits a terahertz electromagnetic wave toward the medium being transported; the electromagnetic wave receiver 2 that receives the terahertz electromagnetic wave transmitted through the medium; and a controller 60 that controls the electromagnetic wave transmitter 1, the electromagnetic wave receiver 2, and the transport unit 50.

The electromagnetic wave transmitter 1 transmits a terahertz electromagnetic wave having a predetermined frequency and polarized in a predetermined direction, at a constant intensity, toward the medium. The electromagnetic wave transmitter 1 includes: a transmission element unit 11 that oscillates the terahertz electromagnetic wave having the predetermined frequency; a transmitter-side condenser unit 21 that condenses the terahertz electromagnetic wave oscillated by the transmission element unit 11 onto the medium; and a transmitter-side polarizer unit 31 that allows the terahertz electromagnetic wave polarized in the predetermined direction to pass therethrough. The terahertz electromagnetic wave transmitted from the electromagnetic wave transmitter 1 is applied to the medium and to the resonator structure included in the medium.

The electromagnetic wave receiver 2 receives the terahertz electromagnetic wave transmitted through the medium and the resonator structure included in the medium, and detects the intensity of the received wave. The electromagnetic wave receiver 2 includes: a receiver-side polarizer unit 32 that allows the terahertz electromagnetic wave polarized in a predetermined direction to pass therethrough; a reception element unit 12 that detects an intensity of the terahertz electromagnetic wave; and a receiver-side condenser unit 22 that condenses the terahertz electromagnetic wave transmitted through the receiver-side polarizer unit 32 onto the reception element unit 12. The electromagnetic wave receiver 2 can also calculate a transmissivity of the terahertz electromagnetic wave based on a ratio of an intensity of the terahertz electromagnetic wave transmitted through the medium to an intensity of the terahertz electromagnetic wave that is detected without the medium. The transmissivity may be calculated by the electromagnetic wave receiver 2, or may be calculated by the controller 60. In the latter case, the electromagnetic wave receiver 2 outputs the intensity of the received terahertz electromagnetic wave, and the controller 60 calculates the transmissivity.

The transport unit 50 drives a plurality of rollers and belts to rotate, thereby transporting the medium along a transport path. The controller 60 controls the transport unit 50 to transport the medium so as to pass between the electromagnetic wave transmitter 1 and the electromagnetic wave receiver 2. The controller 60 controls the electromagnetic wave transmitter 1 to transmit the terahertz electromagnetic wave having the predetermined frequency toward the medium. The controller 60 controls the electromagnetic wave receiver 2 to receive the terahertz electromagnetic wave having been emitted from the electromagnetic wave transmitter 1 and transmitted through the medium. The controller 60 can determine: a value of a transmissivity calculated based on respective strengths of the terahertz electromagnetic wave transmitted from the electromagnetic wave transmitter 1 and the terahertz electromagnetic wave received by the electromagnetic wave receiver 2; a change in the transmissivity; and the like. The controller 60 outputs the detection result to, for example, an external apparatus such as a recognition apparatus for recognizing the medium. In addition, for example, an apparatus may be configured to include the electromagnetic wave detection apparatus shown in FIG. 1, and this apparatus may perform recognition and inspection of the medium, which will be described later in detail.

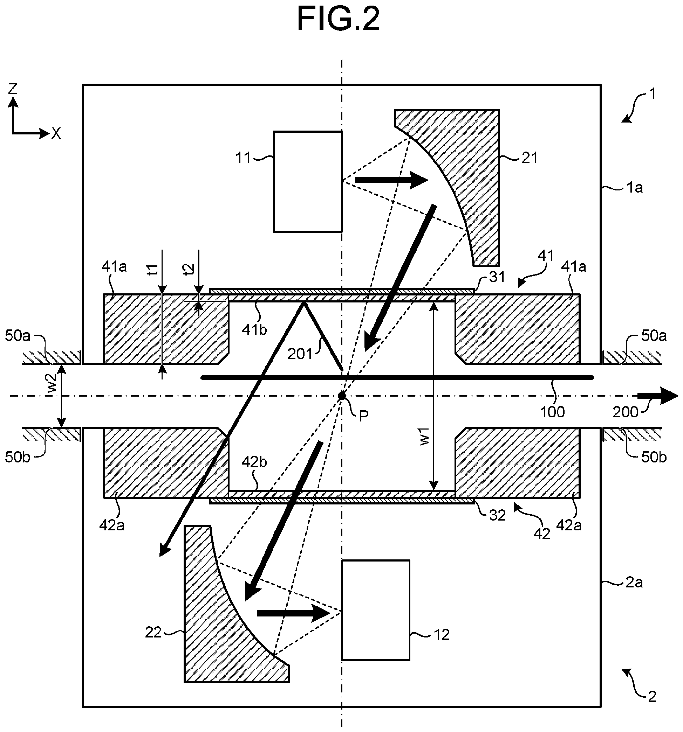

FIG. 2 is a schematic cross-sectional view showing the configurations of the electromagnetic wave transmitter 1 and the electromagnetic wave receiver 2 as viewed from the lateral side. The transport unit 50 transports a medium 100 in a transport direction (X-axis positive direction) indicated by an arrow 200, along a transport path formed between an upper guide plate 50a and a lower guide plate 50b. A dimension w2 of the transport path in the height direction (a dimension in the Z-axis direction) is about a few millimeters.

As shown in FIG. 2, a transmitter-side window unit 41 (41a, 41b) made of a transparent resin material such as polyethylene or polypropylene is disposed on a lower surface of a case 1a of the electromagnetic wave transmitter 1. The transmitter-side window unit 41 has a recessed cross-sectional shape in which a thin plate member 41b is disposed between two rectangular parallelepiped-shaped thick plate members 41a respectively disposed on the upstream side and the downstream side in the transport direction. An outer surface opposing the electromagnetic wave receiver 2 is recessed in a square U-shape, whereby a recessed part is formed. The terahertz electromagnetic wave is transmitted and received in an area where this recessed part is formed.

In both outer sides, in the transport direction, of the lower surface of the thick plate members 41a, i.e., an entry side and a discharge side for the medium 100 being transported by the transport unit 50, are flush with the lower surface of the upper guide plate 50a forming the transport path. Meanwhile, opposed inner portions forming the recessed part are chamfered. For example, the thick plate member 41a has a thickness t1 of 5 mm, and the thin plate member 41b has a thickness t2 of 0.3 mm. The thickness of the thin plate member 41b is set according to the wavelength of the terahertz electromagnetic wave and the material of the thin plate member 41b so that the terahertz electromagnetic wave applied to the medium 100 is not shielded, in other words, so that the thin plate member 41b functions as a transparent member with respect to the terahertz electromagnetic wave.

A receiver-side window unit 42 (42a, 42b) made of the same transparent resin material as the transmitter-side window unit 41 is disposed on an upper surface of a case 2a of the electromagnetic wave receiver 2. The receiver-side window unit 42 has a recessed cross-sectional shape in which a thin plate member 42b is disposed between two rectangular parallelepiped-shaped thick plate members 42a respectively disposed on the upstream side and the downstream side in the transport direction. An outer surface opposing the electromagnetic wave transmitter 1 is recessed in a square U-shape, whereby a recessed part is formed. The thick plate member 42a of the receiver-side window unit 42 has the same thickness (t2) and shape as the thick plate member 41a of the transmitter-side window unit 41. The thin plate member 42b of the receiver-side window unit 42 has the same thickness (t1) and shape as the thin plate member 41b of the transmitter-side window unit 41. In both an entry side and the discharge side for the medium 100 being transported by the transport unit 50, the upper surface of the thick plate member 42a of the receiver-side window unit 42 is flush with the upper surface of the lower guide plate 50b forming the transport path. Meanwhile, opposed inner portions forming the recessed part are chamfered.

In a substantially center portion, in the transport direction, of the transmitter-side window unit 41 disposed above the transport path, the upwardly recessed part is formed. Opposing this recessed part, the downwardly recessed part is formed in a substantially center portion, in the transport direction, of the receiver-side window unit 42 disposed beneath the transport path. Thus, a space, which is broader than spaces on the upstream side and the downstream side in the transport direction, is formed in the substantially center portion in the transport direction between the electromagnetic wave transmitter 1 and the electromagnetic wave receiver 2 opposed to each other. This space is used as a measurement space where a terahertz electromagnetic wave is transmitted and received between the electromagnetic wave transmitter 1 and the electromagnetic wave receiver 2, and the transmissivity of the terahertz electromagnetic wave transmitted through the medium is measured.

For example, a height w2 of the transport path formed between the upper guide plate 50a and the lower guide plate 50b is 2.5 mm. For example, when the thickness t1 of the thick plate members 41a, 42a is 5 mm and the thickness t2 of the thin plate members 41b, 42b is 0.3 mm as described above, a dimension w1 of the measurement space in the height direction (dimension in the Z-axis direction) is 11.9 mm.

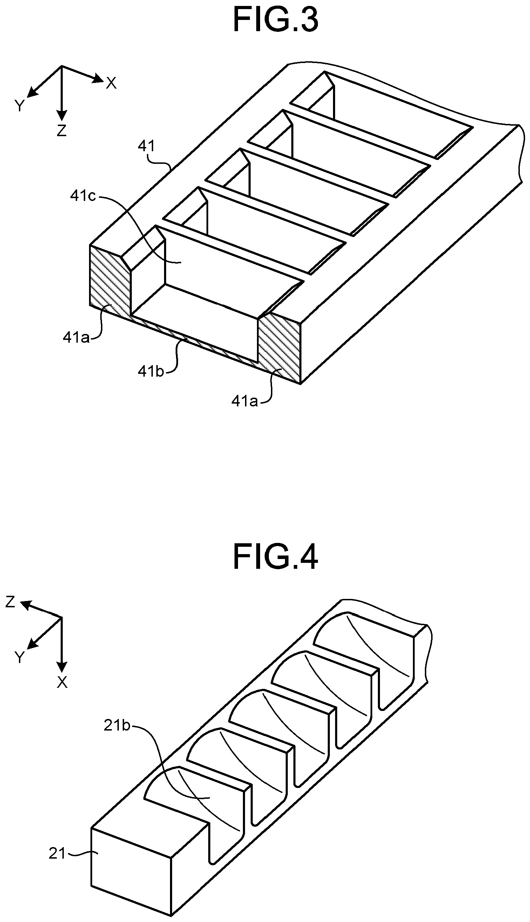

In order to prevent deformation such as distortion from occurring in the thin plate members 41b, 42b made of a transparent resin material, the transmitter-side window unit 41 and the receiver-side window unit 42 are provided with support members for supporting the thin plate members 41b, 42b. Since the transmitter-side window unit 41 and the receiver-side window unit 42 have the same configuration, the transmitter-side window unit 41 will be specifically described as an example. FIG. 3 is a perspective cross-sectional view showing the configuration of the window unit. As shown in FIG. 3, the thin plate member 41b formed between the thick plate members 41a is supported by support members 41c. For example, a plate member made of a transparent resin material is cut from one side thereof while leaving the thin plate member 41b to form rectangular parallelepiped-shaped measurement spaces. The respective measurement spaces are formed for different channels so as to correspond to transmission elements forming the transmission element unit 11, which will be described later in detail.

The terahertz electromagnetic wave condensed onto a point P shown in FIG. 2 is in a beam shape. A beam diameter at the point P is about 1 mm to 5 mm in terms of a half width. This beam diameter can be set to any value depending on an object to be detected.

As shown in FIG. 2, the electromagnetic wave transmitter 1 and the electromagnetic wave receiver 2 transmit and receive the terahertz electromagnetic wave so that the wave passes the point P in the diagonal direction as viewed from the lateral side. That is, the terahertz electromagnetic wave is transmitted and received in the diagonal direction with respect to a medium plane of the sheet-like medium 100. Specifically, the terahertz electromagnetic wave is transmitted and received in a direction that is parallel to an XZ plane and forms an angle with respect to a YZ plane. For example, the terahertz electromagnetic wave is transmitted and received in a diagonal direction forming an angle of 28 degrees with respect to the YZ as a vertical plane.

A part of the terahertz electromagnetic wave applied to the medium 100 in the diagonal direction is reflected by the upper surface of the medium 100. At this time, the terahertz electromagnetic wave reflected by the medium 100 is not detected by the electromagnetic wave receiver 2. Specifically, as indicated by an arrow 201 in FIG. 2, the terahertz electromagnetic wave reflected by the medium 100 is again reflected by the transmitter-side window unit 41 and transmitted through the receiver-side window unit 42. At this time, the terahertz electromagnetic wave passes outside the receiver-side condenser unit 22 and does not reach the reception element unit 12.

The dimensions and positions of the components forming the electromagnetic wave transmitter 1, the dimensions and positions of the components forming the electromagnetic wave receiver 2, and the positional relation between the electromagnetic wave transmitter 1 and the electromagnetic wave receiver 2 are set so that the terahertz electromagnetic wave transmitted from the transmission element unit 11 and reflected by the medium 100 does not reach the reception element unit 12. Specifically, the recessed part of the transmitter-side window unit 41 and the recessed part of the receiver-side window unit 42 are formed with the positions, dimensions, and shapes thereof being adjusted so that the wave reflected by the medium 100 does not reach the reception element unit 12. Thus, the electromagnetic wave receiver 2 can receive only the terahertz electromagnetic wave having been transmitted from the electromagnetic wave transmitter 1 and transmitted through the medium 100.

The transmission element unit 11, the transmitter-side condenser unit 21, and the transmitter-side polarizer unit 31 are housed in the case 1a of the electromagnetic wave transmitter 1. The transmission element unit 11 includes a plurality of transmission elements arrayed in one line along the Y-axis direction. Specifically, a transmission element that transmits a terahertz electromagnetic wave having a polarization direction in the Z-axis direction and a transmission element that transmits a terahertz electromagnetic wave having a polarization direction in the Y-axis direction are alternately arranged in the Y-axis direction.

The transmitter-side condenser unit 21 includes a plurality of condenser mirrors arrayed in one line along the Y-axis direction, corresponding to the respective transmission elements forming the transmission element unit 11. Each condenser mirror reflects a terahertz electromagnetic wave emitted in the horizontal direction (X-axis direction) from the corresponding transmission element so as to make the wave travel diagonally with respect to the vertical direction in the XZ plane, thereby condensing the wave onto the point P in the center of the measurement space. In order to reflect a terahertz electromagnetic wave, each condenser mirror is made of a conductive material such as an aluminum material. For example, a member made of a conductive metal material is cut to form the condenser mirror. Alternatively, for example, a member made of a non-conductive material such as a resin is cut and plated with a conductive metal material to form the condenser mirror. As the condenser mirror, an ellipsoidal mirror is used, for example. FIG. 4 is an external view showing an example of the transmitter-side condenser unit 21 in which ellipsoidal mirrors are formed in an array. Partition walls 21b of the transmitter-side condenser unit 21 shown in FIG. 4 are formed at the same positions in the Y-axis direction as the support members 41c of the transmitter-side window unit 41 shown in FIG. 3. The terahertz electromagnetic wave reflected by each condenser mirror formed between two partition walls 21b is transmitted through the thin plate member 41b in each recessed part formed between two support members 41c, and is condensed onto the point P as shown in FIG. 2.

The transmitter-side polarizer unit 31 shown in FIG. 2 includes a plurality of polarizers arrayed in one line along the Y-axis direction, corresponding to the respective condenser mirrors forming the transmitter-side condenser unit 21, that is, the respective transmission elements forming the transmission element unit 11. The transmitter-side polarizer unit 31 is disposed on the upper surface of the transmitter-side window unit 41 so as to cover the thin plate member 41b. Each polarizer corresponds to a polarization direction of a terahertz electromagnetic wave emitted from the corresponding transmission element. As the polarizer, a wire grid polarizer is adopted, for example.

Specifically, a polarizer that aligns a polarization direction in the XY plane with the X-axis direction and a polarizer that aligns a polarization direction in the XY plane with the Y-axis direction are alternately arranged in the Y-axis direction. A polarizer corresponding to a transmission element having a polarization direction in the Z-axis direction aligns the polarization direction, in the XY plane, of a terahertz electromagnetic wave emitted from the transmission element and condensed by the corresponding condenser mirror, with the X-axis direction. A polarizer corresponding to a transmission element having a polarization direction in the Y-axis direction aligns the polarization direction, in the XY plane, of a terahertz electromagnetic wave emitted from the transmission element and condensed by the corresponding condenser mirror, with the Y-axis direction. As a result, the terahertz electromagnetic wave having the polarization direction in the X-axis direction in the XY plane or the terahertz electromagnetic wave having the polarization direction in the Y-axis direction in the XY plane is condensed onto the point p in each measurement space. Specifically, the terahertz electromagnetic wave having the polarization direction in the X-axis direction and the terahertz electromagnetic wave having the polarization direction in the Y-axis direction are alternately condensed in the Y-axis direction.

The transmission element unit 11 includes a transmission element that transmits a terahertz electromagnetic wave having a polarization direction in the Z-axis direction, and a transmission element that transmits a terahertz electromagnetic wave having a polarization direction in the Y-axis direction. Of the two kinds of transmission elements, the transmission element that transmits the terahertz electromagnetic wave having the polarization direction in the Z-axis direction is a transmission element for transmitting, to the measurement space, the terahertz electromagnetic wave having the polarization direction in the X-axis direction in the XY plane. As shown in FIG. 2, the terahertz electromagnetic wave having the polarization direction in the Z-axis direction is transmitted in the horizontal direction from the transmission element unit 11. This terahertz electromagnetic wave is reflected in the diagonal direction by the transmitter-side condenser unit 21. The polarization direction of the reflected terahertz electromagnetic wave in the XZ plane deviates from the Z axis, and becomes, in the XY plane, the terahertz electromagnetic wave having the polarization direction in the X-axis direction. At this time, there is a possibility that the polarization direction of the reflected terahertz electromagnetic wave may be different from the X-axis direction, i.e., may be out of the XZ plane, due to, for example, positional shift between the transmission element and the condenser mirror. However, since the terahertz electromagnetic wave passes through the corresponding polarizer, the polarization direction thereof in the XY plane can be aligned with the X-axis direction. Thus, in the measurement space where the terahertz electromagnetic wave transmits through the medium 100, the terahertz electromagnetic wave having the polarization direction in the X-axis direction in the XY plane can be condensed onto the point P. Thus, using the transmission element having the polarization direction in the Z-axis direction, and the condenser mirror and the polarizer corresponding to this transmission element, the transmission element unit 11 can apply, to the medium 100, the terahertz electromagnetic wave having the polarization direction in the X-axis direction in the XY plane.

Meanwhile, the polarization direction of the terahertz electromagnetic wave transmitted from the transmission element that transmits the terahertz electromagnetic wave having the polarization direction in the Y-axis direction, remains in the Y-axis direction even after the wave has been reflected and condensed by the transmitter-side condenser unit 21. There is a possibility that the polarization direction of the reflected terahertz electromagnetic wave may deviate from the Y axis due to, for example, positional shift between the transmission element and the condenser mirror. However, since the terahertz electromagnetic wave passes through the corresponding polarizer, the polarization direction in the XY plane can be aligned with the Y-axis direction. Thus, the terahertz electromagnetic wave having the polarization direction in the Y-axis direction in the XY plane can be condensed onto the point P. Thus, using the transmission element having the polarization direction in the Y-axis direction, and the condenser mirror and the polarizer corresponding to this transmission element, the transmission element unit 11 can apply, to the medium 100, the terahertz electromagnetic wave having the polarization direction in the Y-axis direction in the XY plane.

The receiver-side polarizer unit 32, the receiver-side condenser unit 22, and the reception element unit 12 are housed in the case 2a of the electromagnetic wave receiver 2. The receiver-side polarizer unit 32 includes a plurality of polarizers arrayed in one line along the Y-axis direction, corresponding to the respective polarizers forming the transmitter-side polarizer unit 31, that is, the respective transmission elements forming the transmission element unit 11. The receiver-side polarizer unit 32 is disposed on the lower surface of the receiver-side window unit 42 so as to cover the thin plate member 42b. Each polarizer corresponds to a polarization direction of a terahertz electromagnetic wave emitted from the corresponding transmission element. As the polarizer, a wire grid polarizer is adopted, for example.

Specifically, a polarizer that aligns a polarization direction in the XY plane with the X-axis direction and a polarizer that aligns a polarization direction in the XY plane with the Y-axis direction are alternately arranged in the Y-axis direction. A polarizer corresponding to the transmission element having the polarization direction in the Z-axis direction aligns the polarization direction, in the XY plane, of the terahertz electromagnetic wave emitted from the electromagnetic wave transmitter 1 and transmitted through the medium 100, with the X-axis direction. A polarizer corresponding to the transmission element having the polarization direction in the Y-axis direction aligns the polarization direction, in the XY plane, of the terahertz electromagnetic wave emitted from the electromagnetic wave transmitter 1 and transmitted through the medium 100, with the Y-axis direction. As a result, of the terahertz electromagnetic waves transmitted through the medium 100, the terahertz electromagnetic wave having the polarization direction in the X-axis direction in the XY plane and the terahertz electromagnetic wave having the polarization direction in the Y-axis direction in the XY plane reach the receiver-side condenser unit 22.

The receiver-side condenser unit 22 includes a plurality of condenser mirrors arrayed in one line along the Y-axis direction, corresponding to the respective polarizers of the receiver-side polarizer unit 32, that is, the respective transmission elements of the transmission element unit 11. Each condenser mirror reflects the terahertz electromagnetic wave traveling in the diagonal direction with respect to the vertical direction so as to make the wave travel in the horizontal direction, thereby condensing the wave onto the corresponding reception element in the reception element unit 12. In order to reflect a terahertz electromagnetic wave, each condenser mirror is made of a conductive material such as an aluminum material. For example, a member made of a conductive metal material is cut to form the condenser mirror. Alternatively, for example, a member made of a non-conductive material such as a resin is cut and plated with a conductive metal material to form the condenser mirror. As the condenser mirror, an ellipsoidal mirror is used, for example. The receiver-side condenser unit 22 in which a plurality of ellipsoidal mirrors are arrayed has the same configuration as the transmitter-side condenser unit 21 shown in FIG. 4.

The receiver-side window unit 42 has the same configuration as the transmitter-side window unit 41 shown in FIG. 3, and the thin plate member 42b is supported by support members. The support members of the receiver-side window unit 42 and the support members 41c of the transmitter-side window unit 41 are formed at the same positions in the Y-axis direction. The receiver-side condenser unit 22 has the same configuration as the transmitter-side condenser unit 21 shown in FIG. 4, and the support members of the receiver-side window unit 42 and partition walls of the receiver-side condenser unit 22 are formed at the same positions in the Y-axis direction. The terahertz electromagnetic wave, which has reached the electromagnetic wave receiver 2 through the point P in the measurement space, transmits through the thin plate member 42b in each recessed part formed between two support members of the receiver-side window unit 42. Then, the terahertz electromagnetic wave, which has reached the receiver-side condenser unit 22 through the corresponding polarizer, is reflected by the condenser mirror formed between two partition walls and is condensed onto the reception element unit 12 as shown in FIG. 2. Although the transmission element unit 11 and the reception element unit 12 transmit and receive the terahertz electromagnetic wave in the horizontal direction, the transmitter-side condenser unit 21 and the receiver-side condenser unit 22 allow the terahertz electromagnetic wave to be transmitted in the diagonal direction with respect to the medium plane of the medium 100 being transported in the horizontal direction.

The reception element unit 12 shown in FIG. 2 includes a plurality of reception elements arrayed in one line along the Y-axis direction, corresponding to the respective condenser mirrors of the receiver-side condenser unit 22, that is, the respective transmission elements of the transmission element unit 11. Each reception element corresponds to a polarization direction of a terahertz electromagnetic wave emitted from the corresponding transmission element.

Specifically, a reception element that receives a terahertz electromagnetic wave having a polarization direction in the Z-axis direction and a reception element that receives a terahertz electromagnetic wave having a polarization direction in the Y-axis direction are alternately arranged in the Y-axis direction. The reception element that receives the terahertz electromagnetic wave having the polarization direction in the Z-axis direction is disposed so as to correspond to a transmission element that transmits the terahertz electromagnetic wave having the polarization direction in the Z-axis direction. This reception element receives the terahertz electromagnetic wave that has been emitted from the electromagnetic wave transmitter 1, transmitted through the medium 100, passed through the polarizer for aligning the polarization direction in the XY plane with the X-axis direction, and condensed by the condenser mirror. The reception element that receives the terahertz electromagnetic wave having the polarization direction in the Y-axis direction is disposed so as to correspond to a transmission element that transmits the terahertz electromagnetic wave having the polarization direction in the Y-axis direction. This reception element receives the terahertz electromagnetic wave that has been emitted from the electromagnetic wave transmitter 1, transmitted through the medium 100, passed through the polarizer for aligning the polarization direction in the XY plane with the Y-axis direction, and condensed by the condenser mirror.

The reception element unit 12 includes a reception element that receives a terahertz electromagnetic wave having a polarization direction in the Z-axis direction, and a reception element that receives a terahertz electromagnetic wave having a polarization direction in the Y-axis direction. Of the two kinds of reception elements, the reception element that receives the terahertz electromagnetic wave having the polarization direction in the Z-axis direction is a reception element for receiving, in the measurement space, the terahertz electromagnetic wave having the polarization direction in the X-axis direction in the XY plane. As shown in FIG. 2, the receiver-side condenser unit 22 receives a terahertz electromagnetic wave, which has been transmitted through the medium 100, passed through the polarizer that aligns the polarization direction in the XY plane with the X-axis direction, and has reached the receiver-side condenser unit 22, and reflects the wave in the horizontal direction. At this time, the polarization direction of the terahertz electromagnetic wave changes in an opposite direction to the direction of shifting when the wave was reflected by the transmitter-side condenser unit 21. That is, the polarization direction shifted from the Z axis in the XZ plane when the wave was reflected by the transmitter-side condenser unit 21 returns into the Z-axis direction again when the wave is reflected by the receiver-side condenser unit 22. Thus, the terahertz electromagnetic wave whose polarization direction has become the Z-axis direction is received by the reception element that receives a terahertz electromagnetic wave having a polarization direction in the Z-axis direction. The terahertz electromagnetic wave to be received by the reception element has the polarization direction in the Z-axis direction. However, in the measurement space where the terahertz electromagnetic wave has transmitted through the medium 100, the polarization direction of this wave in the XY plane has been the X-axis direction. Thus, using the reception element having the polarization direction in the Z-axis direction, and the condenser mirror and the polarizer corresponding to this reception element, the reception element unit 12 can receive a component, of the terahertz electromagnetic wave transmitted through the medium 100, whose polarization direction in the XY plane is the X-axis direction, as a terahertz electromagnetic wave having a polarization direction in the Z-axis direction.

Meanwhile, regarding the terahertz electromagnetic wave, transmitted through the medium 100, whose polarization direction is the Y-axis direction, the polarization direction remains in the Y-axis direction even after the wave has passed through the polarizer in the receiver-side polarizer unit 32 and has been reflected and condensed by the receiver-side condenser unit 22. Using the reception element having the polarization direction in the Y-axis direction, and the condenser mirror and the polarizer corresponding to this reception element, the reception element unit 12 can detect a component, of the terahertz electromagnetic wave transmitted through the medium 100, whose polarization direction in the XY plane is the Y-axis direction.

As described above, the transmission element unit 11 of the electromagnetic wave transmitter 1 includes the transmission element that transmits a terahertz electromagnetic wave having a polarization direction in the Z-axis direction, and the transmission element that transmits a terahertz electromagnetic wave having a polarization direction in the Y-axis direction. The reception element unit 12 of the electromagnetic wave receiver 2 includes the reception element that receives a terahertz electromagnetic wave having a polarization direction in the Z-axis direction, and the reception element that receives a terahertz electromagnetic wave having a polarization direction in the Y-axis direction. A terahertz electromagnetic wave, whose polarization direction in the XY plane is the Y-axis direction in the measurement space, is transmitted and received by the transmission element that transmits a terahertz electromagnetic wave having a polarization direction in the Y-axis direction and the reception element that receives a terahertz electromagnetic wave having a polarization direction in the Y-axis direction. Meanwhile, a terahertz electromagnetic wave, whose polarization direction in the XY plane is the X-axis direction in the measurement space, is transmitted and received by the transmission element that transmits a terahertz electromagnetic wave having a polarization direction in the Z-axis direction and the reception element that receives a terahertz electromagnetic wave having a polarization direction in the Z-axis direction. A terahertz electromagnetic wave, transmitted from the transmission element, whose polarization direction is the Z-axis direction is reflected by the transmitter-side condenser unit 21 to change the polarization direction in the XZ plane to the diagonal direction. Thus, the terahertz electromagnetic wave having the polarization direction in the X-axis direction in the XY plane can be applied to the medium 100. Then, the terahertz electromagnetic wave transmitted through the medium 100 is reflected again by the receiver-side condenser unit 22 to return the polarization direction thereof to the Z-axis direction. Thus, a component, of the terahertz electromagnetic wave transmitted through the medium 100, whose polarization direction in the XY plane is the X-axis direction can be received by the reception element that receives a terahertz electromagnetic wave having a polarization direction in the Z-axis direction.

The electromagnetic wave transmitter 1 and the electromagnetic wave receiver 2 have the same configuration. Therefore, two electromagnetic wave sensors having the same configuration can be used as the electromagnetic wave transmitter 1 and the electromagnetic wave receiver 2. In the transport direction (X-axis direction) and the direction (Y-axis direction) perpendicular to the transport direction, the positions of the case 1a of the electromagnetic wave transmitter 1 and the case 2a of the electromagnetic wave receiver 2 coincide with positions of the two electromagnetic wave sensors when these two sensors are disposed opposed to each other across the transport path in order to realize the electromagnetic wave transmitter 1 and the electromagnetic wave receiver 2. At this time, in the transport direction (X-axis direction) and the direction (Y-axis direction) perpendicular to the transport direction, the positions of the recessed part formed beneath the lower surface of the transmitter-side window unit 41 and the recessed part formed above the upper surface of the receiver-side window unit 42 coincide with positions of corresponding parts of these two sensors.

A transmission element and a corresponding reception element are configured to transmit and receive a terahertz electromagnetic wave having a polarization direction in a predetermined direction. When a plurality of these fine transmission elements are arranged in an array to form the transmission element unit 11, the arrangement direction of each element is likely to be shifted, which may cause variation in the polarization direction of the terahertz electromagnetic wave emitted from the transmission element. Even in this case, using the transmitter-side polarizer unit 31 allows the electromagnetic wave transmitter 1 to transmit a terahertz electromagnetic wave whose polarization direction in the XY plane is the X-axis direction or the Y-axis direction in the measurement space. Furthermore, when the terahertz electromagnetic wave transmits through the medium 100 in the measurement space, the polarization direction thereof is likely to change and the terahertz electromagnetic wave may include both a component of the X-axis direction and a component of the Y-axis direction in the XY plane. Even in this case, using the receiver-side polarizer unit 32 allows the electromagnetic wave receiver 2 to receive a component, of the terahertz electromagnetic wave transmitted through the medium 100 in the measurement space, whose polarization direction in the XY plane is the X-axis direction or the Y-axis direction.

As described above, a transmission element, a condenser mirror, a polarizer, and a reception element form a detector for transmitting and receiving a terahertz electromagnetic wave having a predetermined polarization direction. However, the configuration of the detector is not limited thereto. For example, if a terahertz electromagnetic wave having a predetermined polarization direction can be transmitted and received by using only the transmission element unit and the reception element unit, at least one of the condenser mirror and the polarizer may be omitted.

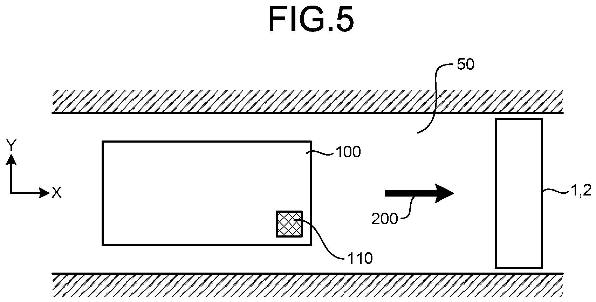

Next, the configurations of the electromagnetic wave transmitter 1 and the electromagnetic wave receiver 2 viewed from above will be described. FIG. 5 schematically shows the electromagnetic wave transmitter 1 and the electromagnetic wave receiver 2 viewed from above. The electromagnetic wave transmitter 1 and the electromagnetic wave receiver 2 are disposed opposed to each other across the transport path along which the transport unit 50 transports the medium 100. The transport unit 50 transports the medium 100 in a transport direction (X-axis direction) indicated by an arrow 200.

The electromagnetic wave transmitter 1 and the electromagnetic wave receiver 2 are elongated in the Y-axis direction perpendicular to the transport direction. When the medium 100 is transported so as to pass between the electromagnetic wave transmitter 1 and the electromagnetic wave receiver 2, the entire surface of the medium 100 can be subjected to application and detection of the terahertz electromagnetic wave. As shown in FIG. 5, for example, a resonator structure 110 that indicates a predetermined transmissivity when irradiated with the terahertz electromagnetic wave is disposed at a corner of the medium 100. Even when this medium 100 is transported while being one-sided in the Y-axis positive direction or negative direction on the transport path or while being rotated by 180 degrees from the state shown in FIG. 5, the terahertz electromagnetic wave, which has been emitted from the electromagnetic wave transmitter 1 and transmitted through the resonator structure 110, can be received by the electromagnetic wave receiver 2.

The transmission element unit 11 has the configuration in which a plurality of transmission elements are arrayed in one line along the Y-axis direction. The reception element unit 12 has the configuration in which a plurality of reception elements are arrayed in one line along the Y-axis direction. The transmitter-side condenser unit 21 and the receiver-side condenser unit 22 each have the configuration in which a plurality of condenser mirrors are arrayed in one line along the Y-axis direction. The transmitter-side polarizer unit 31 and the receiver-side polarizer unit 32 each have the configuration in which a plurality of polarizers are arrayed in one line along the Y-axis direction. A detector is composed of a transmission element of the transmission element unit 11, a condenser mirror of the transmitter-side condenser unit 21, a polarizer of the transmitter-side polarizer unit 31, a polarizer of the receiver-side polarizer unit 32, a condenser mirror of the receiver-side condenser unit 22, and a reception element of the reception element unit 12, and the respective components are disposed so as to correspond to each other. That is, the transmission element, the condenser mirrors, the polarizers, and the reception element are disposed with their positions and directions being adjusted so that a terahertz electromagnetic wave transmitted from the transmission element can be received by the corresponding reception element.

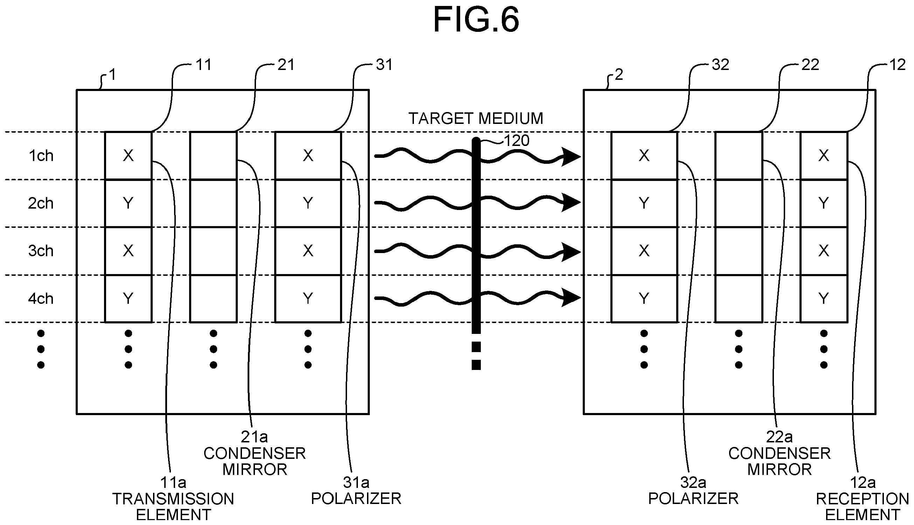

FIG. 6 illustrates the correspondence between the electromagnetic wave transmitter 1 and the electromagnetic wave receiver 2. The electromagnetic wave transmitter 1 is composed of a plurality of channels when each transmission element is regarded as a channel. Likewise, the electromagnetic wave receiver 2 is composed of a plurality of channels when each reception element is regarded as a channel. Each channel is provided with a condenser mirror of the transmitter-side condenser unit 21, a polarizer of the transmitter-side polarizer unit 31, a polarizer of the receiver-side polarizer unit 32, and a condenser mirror of the receiver-side condenser unit 22. Each channel serves as a detector for transmitting and receiving a terahertz electromagnetic wave in a predetermined direction.

A first-channel ("1ch" in FIG. 6) transmission element 11a emits a terahertz electromagnetic wave having a polarization direction in the Z-axis direction. The transmission element 11a is indicated as "X" in FIG. 6 because it is an element for obtaining a terahertz electromagnetic wave whose polarization direction in the XY plane is the X-axis direction in a measurement space. A first-channel condenser mirror 21a reflects the terahertz electromagnetic wave transmitted from the transmission element 11a, and condenses the wave onto a point P in a measurement space formed between a first-channel recessed part of the transmitter-side window unit 41 and a first-channel recessed part of the receiver-side window unit 42. At this time, the reflection by the condenser mirror 21a causes a terahertz electromagnetic wave having a polarization direction in the X-axis direction in the XY plane. A first-channel polarizer 31a allows only the terahertz electromagnetic wave having the polarization direction in the X-axis direction in the XY plane, of the terahertz electromagnetic wave condensed by the condenser mirror 21a, to pass therethrough, thereby aligning the polarization direction in the XY plane with the X-axis direction. The terahertz electromagnetic wave having the polarization direction in the X-axis direction in the XY plane, having been condensed as described above, is applied to a medium 120.

The terahertz electromagnetic wave transmitted through the medium 120 enters the electromagnetic wave receiver 2 from a first-channel recessed part of the receiver-side window unit 42. At this time, a first-channel polarizer 32a allows only the terahertz electromagnetic wave having the polarization direction in the X-axis direction in the XY plane to pass therethrough, thereby aligning the polarization direction in the XY plane with the X-axis direction. A first-channel condenser mirror 22a reflects the terahertz electromagnetic wave having the polarization direction in the X-axis direction in the XY plane, which has transmitted through the polarizer 32a, and condenses the wave onto a first-channel reception element 12a. The reflection by the condenser mirror 22a causes the terahertz electromagnetic wave whose polarization direction in the XY plane has been the X-axis direction in the measurement space to become a terahertz electromagnetic wave having a polarization direction in the Z-axis direction. The first-channel reception element 12a is an element that receives a terahertz electromagnetic wave having a polarization direction in the Z-axis direction. The reception element 12a receives the terahertz electromagnetic wave having the polarization direction in the Z-axis direction, which has been reflected and condensed by the condenser mirror 22a. Since the reception element 12a is an element for receiving a terahertz electromagnetic wave whose polarization direction in the XY plane is the X-axis direction in the measurement space, the reception element 12a is indicated as "X" in FIG. 6. Thus, the first-channel reception element 12a can receive a component, of the terahertz electromagnetic wave transmitted through the medium 120 in the measurement space, whose polarization direction in the XY plane is the X-axis direction. In odd-numbered channels, transmission and reception of a terahertz electromagnetic wave are performed in a similar manner to that for the first channel.

A transmission element, a condenser mirror, and a polarizer in a second-channel electromagnetic wave transmitter 1 and a polarizer, a condenser mirror, and a reception element in a second-channel electromagnetic wave receiver 2 transmit and receive a terahertz electromagnetic wave having a polarization direction in the Y-axis direction. Specifically, a terahertz electromagnetic wave having a polarization direction in the Y-axis direction is transmitted from the transmission element, and the polarization direction is aligned by the polarizer when the wave is reflected and condensed by the condenser mirror. Then, the wave is applied to the medium 120 through a second-channel recessed part of the transmitter-side window unit 41. The terahertz electromagnetic wave transmitted through the medium 120 enters the electromagnetic wave receiver 2 from a second-channel recessed part of the receiver-side window unit 42. After the polarization direction of the terahertz electromagnetic wave is aligned with the Y-axis direction by the polarizer, the wave is reflected and condensed by the condenser mirror and received by the reception element. Thus, the second-channel reception element can receive a component, of the terahertz electromagnetic wave transmitted through the medium 120 in the measurement space, whose polarization direction in the XY plane is the Y-axis direction. In even-numbered channels, transmission and reception of a terahertz electromagnetic wave are performed in a similar manner to that for the second channel.

As shown in FIG. 6, the odd-numbered-channel detectors for transmitting and receiving a terahertz electromagnetic wave whose polarization direction in the XY plane is the X-axis direction in the measurement space, and the even-numbered-channel detectors for transmitting and receiving a terahertz electromagnetic wave whose polarization direction in the XY plane is the Y-axis direction in the measurement space, are arrayed in one line along the Y-axis direction. In each odd-numbered channel, transmission characteristics of the terahertz electromagnetic wave whose polarization direction in the XY plane is the X-axis direction can be detected. In each even-numbered channel, transmission characteristics of the terahertz electromagnetic wave whose polarization direction in the XY plane is the Y-axis direction can be detected. The number of channels and the pitch of the channels depend on the size, etc., of the medium 100 to be handled. For example, 15 to 30 channels are arrayed at a pitch of 10 mm.

Next, an example of inspection of transmission characteristics of a resonator structure made of a meta-material by using the electromagnetic wave detection apparatus will be described. Specifically, a meta-material functioning as a resonator structure includes a conductive layer in which multiple split ring resonators (hereinafter, abbreviated as "SRR") having open parts are formed at regular intervals in a thin layer made of a conductive material. Each SRR has an almost C-shape obtained by cutting a part of the ring to form an open part. The SRRs show different transmissivities depending on the frequency and the polarization direction of a terahertz electromagnetic wave applied thereto.

The electromagnetic wave detection apparatus applies, to the resonator structure composed of the SRRs, a terahertz electromagnetic wave that is polarized in a specific direction and has a frequency (resonance frequency) at which the SRRs resonate. Then, the electromagnetic wave detection apparatus detects a transmissivity from the terahertz electromagnetic wave transmitted through the medium 100.

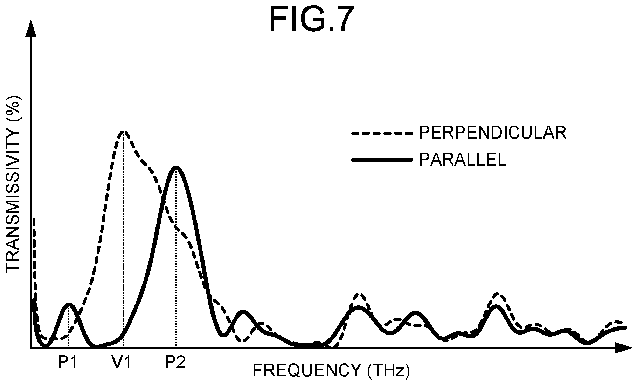

A description is given of the order of the resonance frequency. FIG. 7 illustrates an example of frequency characteristics of transmissivity obtained when a terahertz electromagnetic wave is applied to a region where SRRs are arranged. When multiple SRRs having open parts are arranged at regular intervals in an area sufficiently wider than an area to which the terahertz electromagnetic wave is applied, the frequency characteristics shown in FIG. 7 are obtained.

When the polarization direction of the applied terahertz electromagnetic wave and the direction of the open parts of an SRRs formed in the application region are the same, that is, parallel to each other, the frequency characteristics indicated by a solid line in FIG. 7 are obtained. Meanwhile, when the polarization direction of the applied terahertz electromagnetic wave and the direction of the open parts of the SRRs formed in the application region are perpendicular to each other, the frequency characteristics indicated by a broken line in FIG. 7 are obtained. Specifically, for example, in a case where the direction of the open parts of the SRRs is the X-axis direction, the frequency characteristics indicated by the solid line are obtained when the polarization direction of the terahertz electromagnetic wave is the X-axis direction, and the frequency characteristics indicated by the broken line are obtained when the polarization direction thereof is the Y-axis direction. The direction of an open part of an SRR is a direction in which the open part is present as viewed from the center of the SRR.

When the direction of the open parts of the SRRs and the polarization direction of the terahertz electromagnetic wave are the same, two clear peaks P1, P2 are observed as indicated by the solid line in FIG. 7. Meanwhile, when the direction of the open parts of the SRRs and the polarization direction of the terahertz electromagnetic wave are perpendicular to each other, a clear peak V1 is observed as indicated by the broken line in FIG. 7. The frequencies at which the respective peaks are obtained are P1, V1, and P2 in the ascending order.

The frequency (predetermined frequency) of the terahertz electromagnetic wave is preferably a frequency at which change of a transmissivity is great when the direction of the open parts of the SRRs is changed with respect to the polarization direction (predetermined direction) of the applied terahertz electromagnetic wave. When comparing a ratio between a transmissivity (solid line) for the X polarized light and a transmissivity (broken line) for the Y polarized light for the peaks P1, V1 and P2, the peaks at which the ratio is great are P1 and V1. For comparison of transmissivities obtained when predetermined terahertz electromagnetic waves having different polarization directions are applied to the SRR, the peak P1 and the peak V1 are preferably adopted. Therefore, in this embodiment, examples, in which the frequency at the peak P1 is regarded as a primary resonance frequency, and the frequency at the peak V1 is regarded as a secondary resonance frequency, are described. The primary resonance frequency may be a frequency band including the frequency at the peak P1 and neighboring frequencies, and the secondary resonance frequency may be a frequency band including the frequency at the peak V1 and neighboring frequencies.

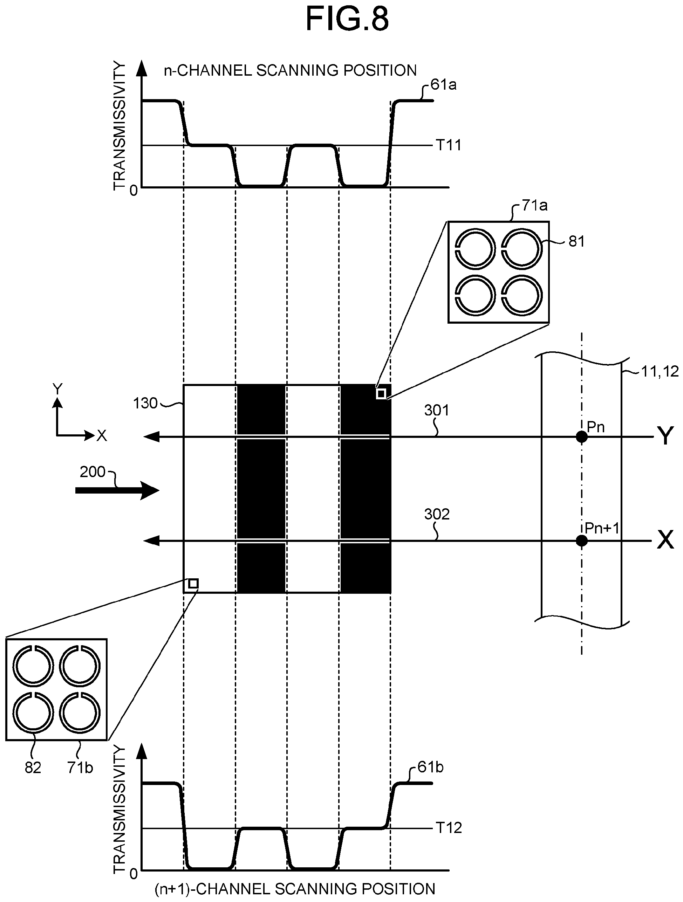

FIG. 8 illustrates an example of inspection of transmission characteristics of a terahertz electromagnetic wave. Using the electromagnetic wave transmitter 1 and the electromagnetic wave receiver 2, transmission characteristics of a terahertz electromagnetic wave through a resonator structure 130 shown in FIG. 8 are inspected. The resonator structure 130 has an about 20 mm × 20 mm square sheet-like shape, and has four divisional regions arranged at regular intervals in the X-axis direction.

Each of black regions and white regions shown in FIG. 8 is a resonator structure made of a meta-material. As shown in partially enlarged views 71a, 71b in FIG. 8, SRRs 81, 82 are arranged in the respective regions. The direction of the open parts of the SRRs 81 in the black region is different from the direction of the open parts of the SRRs 82 in the white region. Therefore, the black region and the white region show different transmissivities depending on the polarization direction of the terahertz electromagnetic wave.

FIG. 8 illustrates a case where a terahertz electromagnetic wave having the primary resonance frequency is applied. Each SRR 82 in the white region has the open part in a direction parallel to the Y-axis direction. When a terahertz electromagnetic wave having a polarization direction in the Y-axis direction is applied, the transmissivity in the white region indicates a high value. Meanwhile, when a terahertz electromagnetic wave having a polarization direction in the X-axis direction is applied, the transmissivity in the white region is almost 0 (zero). Each SRR 81 in the black region has the open part in a direction parallel to the X-axis direction. Therefore, when the terahertz electromagnetic wave having the polarization direction in the X-axis direction is applied, the transmissivity in the black region indicates a high value. Meanwhile, when the terahertz electromagnetic wave having the polarization direction in the Y-axis direction is applied, the transmissivity in the black region is almost 0 (zero).

A medium having the resonator structure 130 is transported in a transport direction indicated by an arrow 200 by the transport unit 50 as shown in FIG. 5. At this time, as shown in FIG. 8, the resonator structure 130 passes through a position Pn of an n channel and a position Pn+1 of an (n+1) channel (n: even number). The n channel is a channel that transmits and receives a terahertz electromagnetic wave whose polarization direction in the XY plane is the Y-axis direction in the measurement space. In the n channel, the resonator structure 130 is scanned as indicated by an arrow 301 in FIG. 8 to obtain a transmissivity of the terahertz electromagnetic wave having the polarization direction in the Y-axis direction. Meanwhile, the (n+1) channel is a channel that transmits and receives a terahertz electromagnetic wave whose polarization direction in the XY plane is the X-axis direction in the measurement space. In the (n+1) channel, the resonator structure 130 is scanned as indicated by an arrow 302 to obtain a transmissivity of the terahertz electromagnetic wave having the polarization direction in the X-axis direction.

As a result, in the n channel, as shown on the upper side in FIG. 8, a transmissivity waveform 61a, in which the transmissivity indicates almost 0 (zero) in the black region and indicates a predetermined value T11 (T11>0) in the white region, is obtained. Meanwhile, in the (n+1) channel, as shown on the lower side in FIG. 8, a transmissivity waveform 61b, in which the transmissivity indicates a predetermined value T12 (T12>0) in the black region and indicates almost 0 (zero) in the white region, is obtained. Thus, when the black region is scanned, different transmissivities are obtained between the channel that transmits and receives the terahertz electromagnetic wave having the polarization direction in X-axis direction in the XY plane, and the channel that transmits and receives the terahertz electromagnetic wave having the polarization direction in the Y-axis direction in the XY plane. Likewise, when the white region is scanned, different transmissivities are obtained between the channel that transmits and receives the terahertz electromagnetic wave having the polarization direction in the X-axis direction in the XY plane, and the channel that transmits and receives the terahertz electromagnetic wave having the polarization direction in the Y-axis direction in the XY plane.

For example, when the resonator structure 130 is similarly measured by a conventional apparatus that transmits and receives only a terahertz electromagnetic wave having a polarization direction in the X-axis direction, the same transmissivity waveform 61b is obtained in both the n channel and the (n+1) channel. Therefore, the conventional apparatus can detect that there are two kinds of regions having different transmissivities, but cannot detect that each region shows different transmissivities depending on the polarization direction. In the electromagnetic wave detection apparatus according to the present embodiment, the two kinds of transmissivity waveforms 61a, 61b shown in FIG. 8 are obtained through a single measurement, thereby detecting not only that there are two kinds of regions, i.e., the black region and the white region, showing different transmissivities when irradiated with a terahertz electromagnetic wave having a predetermined polarization direction, but also that distinct transmission characteristics are obtained in which the magnitudes of the transmissivities in the respective regions are reversed when the polarization direction of the terahertz electromagnetic wave is changed by 90 degrees.

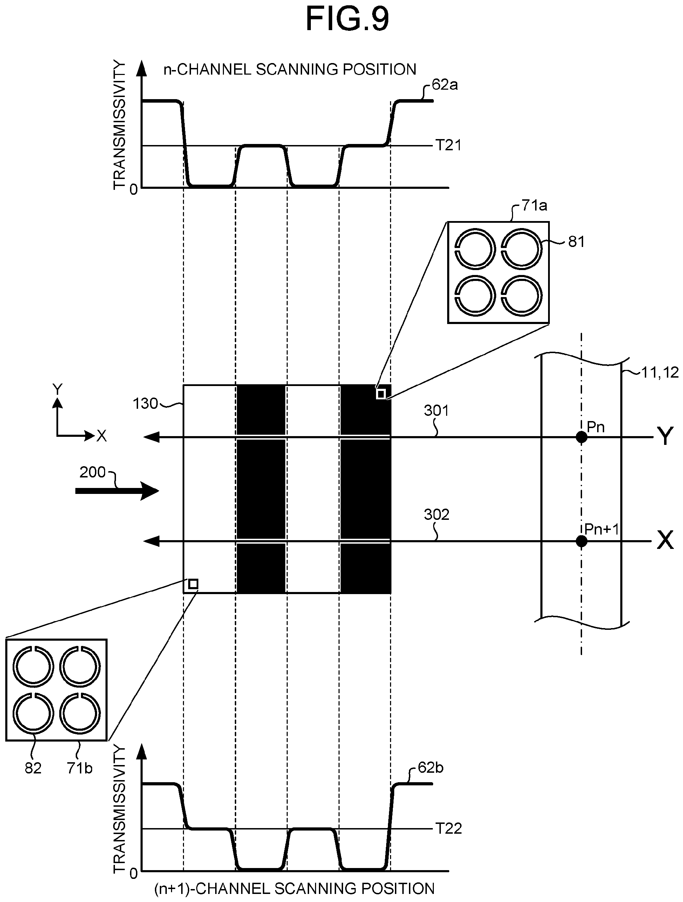

FIG. 9 illustrates another example of inspection of transmission characteristics of a terahertz electromagnetic wave. FIG. 9 is different from FIG. 8 only in that a terahertz electromagnetic wave having the secondary resonance frequency is applied. In a case where the terahertz electromagnetic wave having the secondary resonance frequency is applied to the white region, the transmissivity is almost 0 (zero) when the polarization direction of the terahertz electromagnetic wave is the Y-axis direction, while the transmissivity indicates a high value when the polarization direction is the X-axis direction. Meanwhile, in a case where the terahertz electromagnetic wave having the secondary resonance frequency is applied to the black region, the transmissivity indicates a high value when the polarization direction of the terahertz electromagnetic wave is the Y-axis direction, while the transmissivity is almost 0 (zero) when the polarization direction is the X-axis direction.

As a result, in the n channel, a transmissivity waveform 62a, in which the transmissivity indicates almost 0 (zero) in the white region and indicates a predetermined value T21 (T21>0) in the black region, is obtained as shown on the upper side in FIG. 9. Meanwhile, in the (n+1) channel, a transmissivity waveform 62b, in which the transmissivity indicates a predetermined value T22 (T22>0) in the black region and indicates almost 0 (zero) in the white region, is obtained as shown on the lower side in FIG. 9.

As described above, when using the terahertz electromagnetic wave having the secondary resonance frequency, the two kinds of transmissivity waveforms 62a, 62b shown in FIG. 9 are obtained through a single measurement, thereby detecting not only that there are two kinds of regions, i.e., the black region and the white region, showing different transmissivities when irradiated with a terahertz electromagnetic wave having a predetermined polarization direction, but also that distinct transmission characteristics are obtained in which the magnitudes of the transmissivities in the respective regions are reversed when the polarization direction of the terahertz electromagnetic wave is changed by 90 degrees.

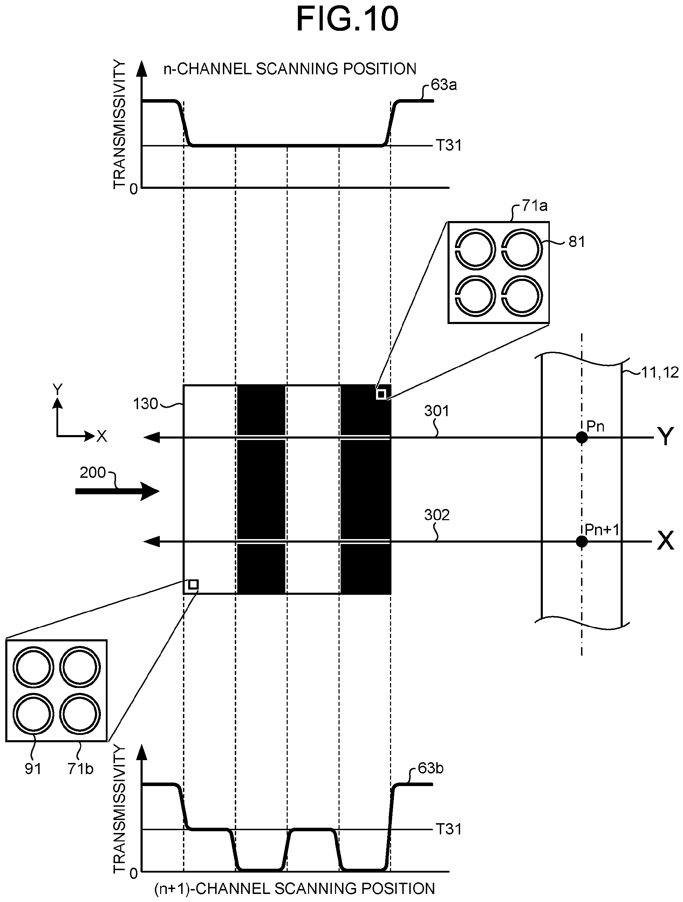

FIG. 10 illustrates still another example of inspection of transmission characteristics of a terahertz electromagnetic wave. FIG. 10 is different from FIG. 9 only in the configuration of the white region. As shown in a partially enlarged view 71b in FIG. 10, in the white region, multiple closed ring resonators (hereinafter, abbreviated as "CRR") having no open parts are formed at regular intervals in a thin layer made of a conductive material. Each CRR 91 has a ring shape without an open part that is present in each SRR. Like the SRR, the CRR 91 shows different transmissivities depending on the frequency of the applied terahertz electromagnetic wave. Specifically, the CRR 91 resonates and shows a high transmissivity at the secondary resonance frequency of the SRR 82 whose ring part is the same in shape as the CRR 91. However, the CRR 91 shows a high transmissivity at the secondary resonance frequency regardless of whether the polarization direction of the terahertz electromagnetic wave is the X-axis direction or the Y-axis direction.

In a case where the terahertz electromagnetic wave having the secondary resonance frequency is applied to the black region, the transmissivity indicates a high value when the polarization direction of the terahertz electromagnetic wave is the Y-axis direction, while the transmissivity is almost 0 (zero) when the polarization direction is the X-axis direction, as in FIG. 9. Meanwhile, when the terahertz electromagnetic wave having the secondary resonance frequency is applied to the white region including the CRRs 91, the transmissivity indicates a high value regardless of whether the polarization direction of the terahertz electromagnetic wave is the X-axis direction or the Y-axis direction.

The SRR 81 in the black region and the CRR 91 in the white region have the same ring shape except for the presence/absence of the open part. Therefore, the transmissivity in the white region and the transmissivity in the black region indicate almost the same value. As a result, in the n channel, a transmissivity waveform 63a, in which the transmissivity indicates a substantially constant value T31 (T31>0) in the white region and the black region, is obtained as shown on the upper side in FIG. 10. Meanwhile, in the (n+1) channel, as shown on the lower side in FIG. 10, a transmissivity waveform 63b, in which the transmissivity has the value T31 in the white region as shown on the upper side in FIG. 10 while the transmissivity is almost 0 (zero) in the black region, is obtained.

As described above, when using the region including the CRRs 91, the two kinds of transmissivity waveforms 63a, 63b shown in FIG. 10 are obtained through a single measurement, thereby detecting not only that there are two kinds of regions, i.e., the black region and the white region, showing different transmissivities when irradiated with a terahertz electromagnetic wave having a predetermined polarization direction, but also that distinct transmission characteristics are obtained in which the transmissivity waveforms in the respective regions are changed when the polarization direction of the terahertz electromagnetic wave is changed by 90 degrees.

The resonator structure made of the meta-material is used as a forgery prevention structure for preventing forgery of mediums such as banknotes, checks, and coupons. The resonator structure, which is disposed as the forgery prevention structure on the surface of or inside a medium, prevents forgery of the medium. Detecting the forgery prevention structure included in a medium enables recognition of the kind of the medium as well as authentication of the medium.

As shown in FIG. 1, the electromagnetic wave detection apparatus includes the electromagnetic wave transmitter (electromagnetic wave sensor) 1 and the electromagnetic wave receiver (electromagnetic wave sensor) 2. An authentication apparatus (medium handling apparatus) is configured so as to include this electromagnetic wave detection apparatus. Thus, the authentication apparatus is able to apply a terahertz electromagnetic wave to a medium by using the electromagnetic wave detection apparatus, and recognize the medium based on obtained characteristics.

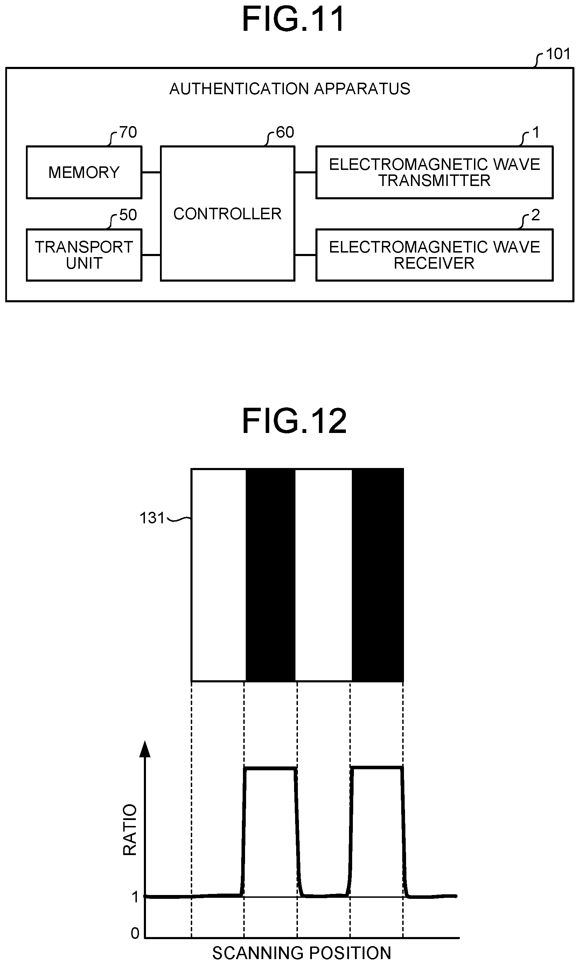

FIG. 11 is a block diagram showing a schematic functional configuration of an authentication apparatus 101. The authentication apparatus 101 includes a memory 70 in addition to the components of the electromagnetic wave detection apparatus shown in FIG. 1. The memory 70 is a non-volatile storage unit including a semiconductor memory and the like. In the memory 70, data to be obtained by applying a predetermined terahertz electromagnetic wave to the forgery prevention structure such as the values of transmissivities, waveforms of the transmissivities, and characteristics of the waveforms are prepared in advance as reference data.

The controller 60 controls, for example, transport of the medium by the transport unit 50, and transmission and reception of the terahertz electromagnetic wave by the electromagnetic wave transmitter 1 and the electromagnetic wave receiver 2. The controller 60 obtains, for example, the value of the transmissivity of the terahertz electromagnetic wave transmitted through the forgery prevention structure, and the waveform of the transmissivity. The controller 60 compares at least one of the value of the transmissivity, the waveform of the transmissivity, the characteristics of the waveform, and the like, with the reference data prepared in advance in the memory 70, to determine authentication of the medium. The controller 60 outputs the result of the authentication to a not-illustrated external apparatus. For example, the result of the authentication is outputted to and displayed on a display unit to notify the result.

The authentication apparatus 101 may be used for, for example, inspection of the forgery prevention structure produced on the medium, in addition to authentication of the medium having the forgery prevention structure. The authentication apparatus 101 may output an intensity or a transmissivity of the terahertz electromagnetic wave transmitted through the forgery prevention structure, in addition to outputting the result of the authentication. The authentication apparatus 101 uses the intensity or the transmissivity to inspect the forgery prevention structure. Specifically, the intensity or the transmissivity of the terahertz electromagnetic wave to be detected at the inspection is prepared in the memory 70, by using the forgery prevention structure which has been property produced. In producing the forgery prevention structure, a terahertz electromagnetic wave is transmitted from the electromagnetic wave transmitter 1 and applied to the forgery prevention structure to be inspected, and the electromagnetic wave receiver 2 receives the terahertz electromagnetic wave having been transmitted through the forgery prevention structure. The intensity or the transmissivity of the terahertz electromagnetic wave, which has been thus detected from the forgery prevention structure to be inspected, is compared with the reference data, and whether or not the intensity or the transmissivity matches the reference data is determined, that is, whether or not the produced forgery prevention structure passes the inspection is determined. Thus, the authentication apparatus 101 may compare the data detected from the forgery prevention structure with the reference data, for pass/fail determination as well as authentication.

The handling performed by the authentication apparatus (medium handling apparatus) 101 shown in FIG. 11 will be described in more detail. In the memory 70, software programs and data required for the controller 60 to recognize a medium are stored in advance. Data indicating a transmissivity waveform obtained when a predetermined terahertz electromagnetic wave is applied to a genuine medium, and data indicating characteristics of the transmissivity waveform are stored in the memory 70 in advance as reference data. Specifically, for example, at least one of a transmissivity waveform, values of transmissivities forming the transmissivity waveform, and characteristics that appear in the transmissivity waveform is used for recognition of the medium. The characteristics used for the recognition are stored in advance as the reference data in the memory 70. The controller 60 functions as a recognition unit for recognizing the medium by using the reference data.

The controller 60 controls the transport unit 50 to transport the medium 100 to be recognized, as shown in FIG. 5. The controller 60 controls the electromagnetic wave transmitter 1 to apply a terahertz electromagnetic wave to the medium 100 being transported by the transport unit 50. The controller 60 controls the electromagnetic wave receiver 2 to receive the terahertz electromagnetic wave transmitted through the medium 100. When the medium 100 is a genuine medium, the transmissivity waveform of the terahertz electromagnetic wave transmitted through the resonator structure (forgery prevention structure) 110 becomes a waveform corresponding to the configuration of the resonator structure 110 as described with reference to FIGS. 8 to 10. The controller 60 compares the obtained transmissivity waveform with the reference data stored in the memory 70.

The reference data indicates characteristics of the transmissivity waveform obtained when the terahertz electromagnetic wave is applied to a resonator structure included in a genuine medium. When the characteristics of the transmissivity waveform obtained from the medium to be recognized match the characteristics prepared as the reference data, the controller 60 determines that the resonator structure is included in a genuine medium, that is, the medium is a genuine medium.

For example, as described with reference to FIG. 10, the terahertz electromagnetic wave emitted from the electromagnetic wave transmitter 1 is applied to the medium being transported by the transport unit 50. As a result, as shown in FIG. 10, the transmissivity waveform 63a is obtained in the n channel of the electromagnetic wave receiver 2, and the transmissivity waveform 63b is obtained in the (n+1) channel.

In the memory 70, n-channel reference data and (n+1)-channel reference data obtained from the resonator structure of the genuine medium has been stored. The controller 60 compares the characteristics of the n-channel transmissivity waveform 63a with the n-channel reference data. The controller 60 compares the characteristics of the (n+1)-channel transmissivity waveform 63b with the (n+1)-channel reference data.

When the characteristics of the transmissivity waveforms 63a, 63b obtained from the resonator structure 130 match the reference data for both the n channel and the (n+1) channel, the controller 60 determines that the resonator structure 130 is a genuine resonator structure, that is, the medium is a genuine medium.

As described above, the authentication apparatus 101 is able to apply two kinds of terahertz electromagnetic waves having different polarization directions to the medium, and determine authenticity of the medium, based on two kinds of transmissivity waveforms obtained from the resonator structure included in the medium.

As long as authenticity of the medium can be recognized, the characteristics of the transmissivity waveforms used for the recognition are not particularly limited. For example, the recognition may be performed by using the entirety of a transmissivity waveform obtained through scanning of the resonator structure 130. Alternatively, the recognition may be performed by using values of some transmissivities forming a transmissivity waveform. Still alternatively, the recognition may be performed by using values derived from, for example, inclination of a transmissivity waveform or change in the inclination.

While the transmissivity waveform 63a and the transmissivity waveform 63b are separately recognized in the above embodiment, a ratio of transmissivities may be obtained from the transmissivity waveform 63a and the transmissivity waveform 63b and the recognition may be performed based on the value of the ratio.

A specific description will be given using the resonator structure 130 shown in FIG. 10 as an example. In the description below, recognition is performed based on the value of a ratio obtained by dividing the value of each transmissivity forming the transmissivity waveform 63a shown in FIG. 10 by the corresponding value of the transmissivity waveform 63b.

FIG. 12 illustrates the ratio of transmissivities used for recognition of a medium. As for a genuine resonator structure 131 shown on the upper side in FIG. 12, transmissivities in an n channel and an (n+1) channel are obtained as shown in FIG. 10. Based on the obtained transmissivities, the value of a ratio thereof is obtained. Then, as shown on the lower side in FIG. 12, the value of the ratio is 1 at the position where the white region is scanned, while the value of the ratio is larger than 1 at the position where black region is scanned. The reference data stored in the memory 70 includes data corresponding to the white region shown in FIG. 12, that is, data specifying the scanning position where the value of the ratio of transmissivities indicates 1. Likewise, the reference data includes data corresponding to the black region, that is, data specifying the scanning position where the value of the ratio of transmissivities exceeds 1. Furthermore, the reference data includes data specifying a numerical range in which the value of the ratio of transmissivities is regarded to be 1.

The controller 60 obtains the transmissivity waveforms in the n channel and the (n+1) channel as shown in FIG. 10, from the resonator structure 130 of the medium to be recognized. The controller 60 obtains the value of a ratio of transmissivities from the obtained two kinds of transmissivity waveforms 63a, 63b. The controller 60 refers to the reference data and determines whether or not the obtained value of the ratio of transmissivities is within the numerical range in which the value is regarded to be 1. Based on the determination result, the controller 60 specifies the scanning position where the value of the radio of transmissivities obtained through scanning of the resonator structure 130 is 1, and the scanning position where the value exceeds 1.

Subsequently, the controller 60 compares the scanning position where the value of the radio of transmissivities is 1 and the scanning position where the value exceeds 1, with the scanning positions included in the reference data. When both the scanning position where the value of the radio of transmissivities is 1 and the scanning position where the value exceeds 1 match the reference data, the controller 60 determines that the resonator structure 130 in which the transmissivity waveforms 63a, 63b has been obtained is a genuine resonator structure, that is, the medium is a genuine medium.

As described above, the authentication apparatus 101 applies the two kinds of terahertz electromagnetic waves having different polarization directions to the medium, and obtains the value of a ratio of transmissivities from the two kinds of transmissivity waveforms obtained by the resonator structures included in the medium. Then, the authentication apparatus 101 can determine authenticity of the medium, based on the result of comparison of the obtained value of the ratio with the reference data.

As long as authenticity of the medium can be determined, the number of values of ratios of transmissivities, to be used for the recognition, is not particularly limited. For example, measurement may be performed at predetermined sampling intervals, and the values of ratios may be obtained from all transmissivities obtained while the resonator structure 130 is scanned, to be compared with the reference data. Alternatively, for example, one or several points may be selected from each of the four regions, i.e., the white regions and the black regions, forming the resonator structure 130, and the values of ratios may be obtained from transmissivities at the selected points and compared with the reference data.

The characteristics used for authentication of a medium are not limited to the value of a ratio of transmissivities. For example, the characteristics used for authentication may be the value of a difference in transmissivity. Specifically, the authentication apparatus 101 may obtain the value of a difference in transmissivity between the transmissivity waveform 63a and the transmissivity waveform 63b, and may compare the obtained value with reference data prepared in advance for the value of a difference in transmissivity. Even in the case of using the value of a difference in transmissivity, the respective processes described above can be realized as in the case of using the value of a ratio.

When resonator structures having different configurations are included in different types of mediums, the authentication apparatus (medium handling apparatus) 101 can also recognize the types of the mediums. Specifically, for example, it is assumed that there are two types of mediums, a type-A medium and a type-B medium, and the resonator structure 130 shown in FIG. 9 is included in the type-A medium while the resonator structure 130 shown in FIG. 10 is included in the type-B medium. In this case, based on the transmissivity waveforms 62a, 62b shown in FIG. 9 obtained from a medium to be recognized, the authentication apparatus 101 determines that this medium is a genuine medium and the type-A medium. Likewise, based on the transmissivity waveforms 63a, 63b shown in FIG. 10 obtained from a medium to be recognized, the authentication apparatus 101 determines that this medium is a genuine medium and the type-B medium.

For example, the authentication apparatus 101 is used while being connected to the display unit as described above. The display unit displays, on a screen, the recognition result obtained by using the authentication apparatus 101. A user of the authentication apparatus 101 is allowed to check the recognition result displayed on the screen of the display unit, and handle the medium based on the recognition result.

For example, the authentication apparatus 101 is used as a medium inspection apparatus for inspecting a resonator structure disposed on a medium as described above. In this case, data indicating characteristics of a normal medium are stored in the memory 70 as reference data. The controller 60 functions as a determination unit that determines a result of the inspection of the medium (whether or not the medium passes the inspection) by comparing the characteristics obtained from the medium with the reference data. After the resonator structure is formed on the medium, the controller 60 applies the two kinds of terahertz electromagnetic waves to the medium as described above. The controller 60 compares the obtained characteristics such as a transmissivity waveform with the reference data to inspect whether or not the resonator structure formed on the medium shows predetermined characteristics.

For example, the authentication apparatus 101 is used while being included in a medium handling apparatus. The medium handling apparatus executes counting, storage, sorting, and the like of mediums, based on the recognition result obtained by using the authentication apparatus 101. At this time, only authentication of each medium may be performed based on the recognition result of the authentication apparatus 101, or both kind recognition and authentication of each medium may be performed.

Specifically, for example, the authentication apparatus 101 is used while being included in a banknote handling apparatus. For example, the banknote handling apparatus continuously takes a plurality of banknotes one by one into the apparatus, recognizes the kind and authenticity of each banknote, and sorts and stores the banknotes into a plurality of storage units for each kind. The banknote handling apparatus uses the authentication apparatus 101 to recognize the kind (denomination) and authenticity of each banknote as described above. Based on the recognition result, the banknote handling apparatus counts the number and/or monetary amount of the banknotes, and sorts and stores the banknotes into the storage units for each kind.

The conventional banknote handling apparatus checks optical characteristics, thicknesses, magnetic characteristics, and the like of banknotes by using various sensors such as a line sensor, a thickness sensor, and a magnetic sensor, to recognize the kinds and authenticity of the banknotes. The banknote handling apparatus including the authentication apparatus 101 may recognize banknotes, based on both the recognition results obtained by the conventional sensors and the recognition result obtained by the authentication apparatus 101. For example, the banknote handling apparatus may recognize the kind of a banknote by using the conventional sensors, and thereafter may recognize authenticity of this banknote by using the authentication apparatus 101. Alternatively, for example, the banknote handling apparatus may obtain the results of kind recognition and authentication by the conventional sensors and the results of kind recognition and authentication by the authentication apparatus 101, and thereafter may comprehensively determine the kind and authenticity of the banknote, based on the obtained recognition results. At this time, the authentication apparatus 101 may perform only authentication, and the comprehensive determination may be made based on the results of kind recognition and authentication by the conventional sensors and on the result of authentication by the authentication apparatus 101.

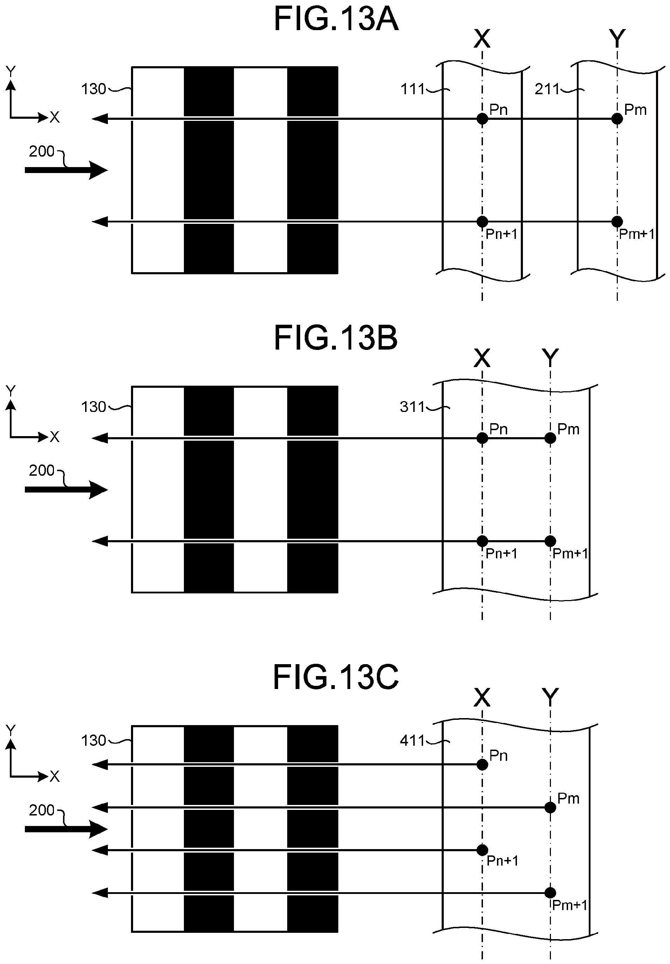

In the present embodiment, a detector that transmits and receives a terahertz electromagnetic wave having a polarization direction in the X-axis direction, and a detector that transmits and receives a terahertz electromagnetic wave having a polarization direction in the Y-axis direction are alternately arrayed in one line. However, the configuration of the electromagnetic wave detection apparatus is not limited thereto. The scope of the invention is limited as defined by the appended claims. FIGS. 13A to 13C illustrate examples of the configuration of the electromagnetic wave detection apparatus which do not fall within the scope of the appended claims. As shown in FIG. 13A, detectors 111 for the terahertz electromagnetic wave having the polarization direction in the X-axis direction may be arrayed in one line along the Y-axis direction, and at a position away from this line in the transport direction of a medium 100 indicated by an arrow 200, detectors 211 for the terahertz electromagnetic wave having the polarization direction in the Y-axis direction may be arrayed in one line along the Y-axis direction. In this case, the detectors 111 and the detectors 211 need not be separated from each other. As shown in FIG. 13B, the detectors for the terahertz electromagnetic wave having the polarization direction in the X-axis direction and the detectors for the terahertz electromagnetic wave having the polarization direction in the Y-axis direction may be integrated with each other to form detectors 311. Alternatively, as shown in FIG. 13C, detectors 411 may be arranged such that detectors in a first line and detectors in a second line are staggered in the Y-axis direction perpendicular to the transport direction. Even in these configurations, as described above, a transmissivity waveform caused by irradiation of the resonator structure 130 with the terahertz electromagnetic wave having the polarization direction in the X-axis direction can be obtained by the detectors in the first line. Furthermore, a transmissivity waveform caused by irradiation of the resonator structure 130 with the terahertz electromagnetic wave having the polarization direction in the Y-axis direction can be obtained by the detectors in the second line.

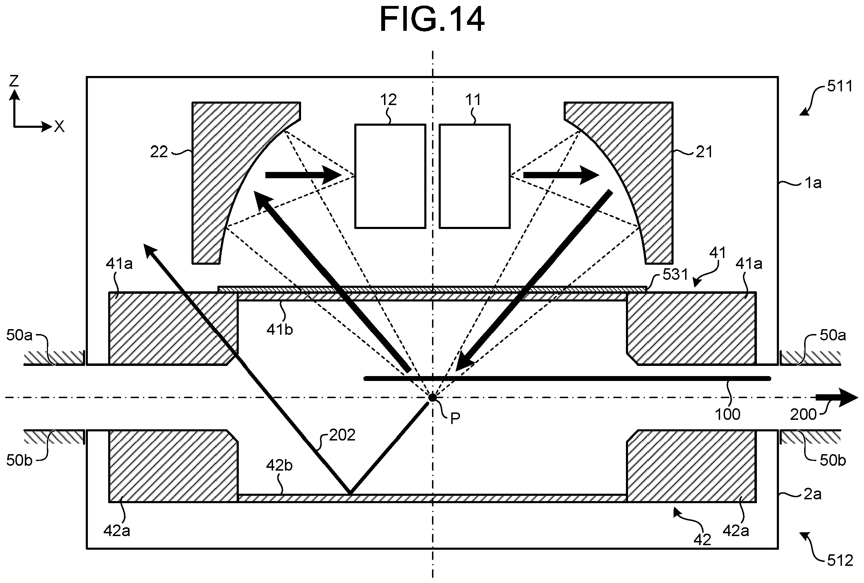

In the present embodiment, the electromagnetic wave detection apparatus measures a transmissivity of a terahertz electromagnetic wave. However, the electromagnetic wave detection apparatus may measure a reflectivity of a terahertz electromagnetic wave. FIG. 14 is a schematic cross-sectional view showing a configuration of an electromagnetic wave detection apparatus that detects reflection characteristics of a terahertz electromagnetic wave. A transmissivity and a reflectivity of a terahertz electromagnetic wave have a relationship such that when one of them increases, the other decreases. The components of the electromagnetic wave transmitter 1 and the components of the electromagnetic wave receiver 2, which are disposed opposed to each other across the transport path in FIG. 2, are both disposed on one side of the transport path as shown in FIG. 14. Specifically, a transmission element unit 11, a transmitter-side condenser unit 21, a receiver-side condenser unit 22, a reception element unit 12, and a polarization unit 531 are housed in a case 1a of an electromagnetic wave transmitter/receiver unit 511 disposed above the transport path. The polarization unit 531 serves as both the transmitter-side polarizer unit 31 and the receiver-side polarizer unit 32 described above. In the configuration shown in FIG. 14, as described above, a predetermined terahertz electromagnetic wave is transmitted from the transmission element unit 11, and the terahertz electromagnetic wave reflected by a medium 100 can be received by the corresponding reception element unit 12. Then, a reflectivity of the terahertz electromagnetic wave is measured, whereby characteristics of a resonator structure (forgery prevention structure) based on a transmissivity of the terahertz electromagnetic wave are obtained, which enable authentication. In this case, as shown in FIG. 14, an electromagnetic wave reflector 512 may be disposed at a position opposing the electromagnetic wave transmitter/receiver unit 511 across the transport path. The electromagnetic wave reflector 512 has a configuration obtained by removing the receiver-side polarizer unit 32, the receiver-side condenser unit 22, and the reception element unit 12 from the electromagnetic wave receiver 2 shown in FIG. 2. As shown by an arrow 202 in FIG. 14, the terahertz electromagnetic wave emitted from the electromagnetic wave transmitter/receiver unit 511 and transmitted through the medium 100, and the terahertz electromagnetic wave transmitted in the state where the medium 100 is absent, pass outside the receiver-side condenser unit 22 and do not reach the reception element unit 12 even when having been reflected by a window unit 42 of the electromagnetic wave reflector 512.

Specifically, for example, regarding the resonator structure 130 shown in any of FIGS. 8 to 10, the authentication apparatus including the electromagnetic wave detection apparatus shown in FIG. 14 applies two kinds of terahertz electromagnetic waves having different polarization directions to the resonator structure 130 included in the medium. The authentication apparatus measures reflectivities of the two kinds of terahertz electromagnetic waves from the white regions and the black regions forming the resonator structure 130. The authentication apparatus obtains transmissivities based on the measured reflectivities, and performs authentication, kind recognition, medium handling, and inspection of the resonator structure as described above. Alternatively, for example, reference data corresponding to a reflectivity to be obtained from the genuine resonator structure 130 may be prepared in advance, and the authentication apparatus may proceed the above processes based on the obtained reflectivity and the reference data. Regarding reflectivity, the value of a ratio of reflectivities may be used, or the value of a difference in reflectivity may be used, as in the case of transmissivity.

In the present embodiment, two kinds of terahertz electromagnetic waves having polarization directions in the X-axis direction and the Y-axis direction are used. However, three or more kinds of terahertz electromagnetic waves having different polarization directions may be used.

As described above, the electromagnetic wave transmitter and the electromagnetic wave receiver each have a configuration in which a channel that transmits/receives a terahertz electromagnetic wave having a polarization direction in the X-axis direction and a channel that transmits/receives a terahertz electromagnetic wave having a polarization direction in the Y-axis direction are alternately arranged in an array in the measurement space. Therefore, transmission characteristics of the two kinds of terahertz electromagnetic waves having the different polarization directions can be detected through a single measurement.

When the terahertz electromagnetic wave emitted from the electromagnetic wave transmitter is applied to the medium in the diagonal direction and the terahertz electromagnetic wave transmitted through the medium is detected by the electromagnetic wave receiver, even if the terahertz electromagnetic wave that is reflected by the medium advances, this reflected wave is not received by the electromagnetic wave receiver. Thus, transmission characteristics of the terahertz electromagnetic wave can be measured with high accuracy.

### INDUSTRIAL APPLICABILITY

As described above, the electromagnetic wave detection apparatus, the medium handling apparatus, and the medium inspection apparatus according to the present invention are useful for easily detecting characteristics of an object with respect to terahertz electromagnetic waves having different polarization directions.

### DESCRIPTION OF THE REFERENCE CHARACTERS

- 1: Electromagnetic wave transmitter
- 2: Electromagnetic wave receiver
- 11: Transmission element unit
- 12: Reception element unit
- 21: Transmitter-side condenser unit
- 22: Receiver-side condenser unit
- 31: Transmitter-side polarizer unit
- 32: Receiver-side polarizer unit
- 41: Transmitter-side window unit
- 42: Receiver-side window unit
- 50: Transport unit
- 60: Controller
- 70: Memory
- 101: Authentication apparatus
- 511: Electromagnetic wave transmitter/receiver unit
- 512: Electromagnetic wave reflector
- 531: Polarization unit

## Claims

1. An electromagnetic wave detection apparatus (1, 511) configured to detect a characteristic of a resonator structure (110, 130) made of a meta-material formed in a part of a medium (100) being transported in a transport direction (X-axis direction) to pass a predetermined position (P), the electromagnetic wave detection apparatus (1, 511) comprising:
a first detector channel (1ch) comprising a first transmission element (11) configured to transmit a first terahertz electromagnetic wave having a first polarization direction to the medium (100) and a first reception element (12) configured to receive the first terahertz electromagnetic wave having the first polarization direction from the medium (100);
a second detector channel (2ch) comprising a second transmission element (11) configured to transmit a second terahertz electromagnetic wave having a second polarization direction different from the first polarization direction to the medium (100) and a second reception element (12) configured to receive the second terahertz electromagnetic wave having the second polarization direction from the medium (100); and
a controller (60) configured to detect the characteristic of the resonator structure (110, 130) of the medium (100) from portions of the first terahertz electromagnetic wave and the second terahertz electromagnetic wave that have been received by the first reception element (12) and the second reception element (12) respectively, **characterized in that**
the first detector channel (1ch) and the second detector channel (2ch) are arranged along a width direction (Y-axis direction) of the transport path perpendicular to the transport direction (X-axis direction) such that the first terahertz electromagnetic wave and the second terahertz electromagnetic wave can be applied to the resonator structure (110, 130) when the medium (100) passes the predetermined position (P).

2. The electromagnetic wave detection apparatus (1, 511) according to claim 1, further comprising a plurality of the first detector channel (1ch, 3ch) and a plurality of the second dection channel (2ch, 4ch), and wherein the plurality of the first detector channel (1ch, 3ch) and the plurality of the second detector channel (2ch, 4ch) are arrayed in the width direction (Y-axis direction), such that the first terahertz electromagnetic wave and the second terahertz electromagnetic wave can be applied to an entire surface of the medium (100).

3. The electromagnetic wave detection apparatus (1, 511) according to claim 1 or 2, wherein
the electromagnetic wave detection apparatus (1, 511) is configured to detect characteristics of a predetermined type of medium (100) including a first region having a first resonator structure (71a) and a second region having a second resonator structure (71b) that show different characteristics on a transmissivity of a terahertz electromagnetic wave depending on a polarization direction of the terahertz electromagnetic wave, and
the controller (60) is configured to detect a first characteristic (61a) on a transmissivity of the first terahertz electromagnetic wave of the first region and the second region, and a second characteristic (61b) on a transmissivity of the second terahertz electromagnetic wave of the first region and the second region.

4. The electromagnetic wave detection apparatus (1, 511) according to claim 3, wherein the first characteristic (61a) indicates the transmissivity of the first region higher than the transmissivity of the second region, and the second characteristic (61b) indicates the transmissivity of the first region lower than the transmissivity of the second region.

5. The electromagnetic wave detection apparatus (1, 511) according to any one of claims 1 to 4, further comprising:
a transport unit (50) configured to move the medium (100) in the transport direction (X-axis direction) along a transport path that coincides with an irradiation path of the first terahertz electromagnetic wave and an irradiation path of the second terahertz electromagnetic wave.

6. The electromagnetic wave detection apparatus (1, 511) according to any one of claims 1 to 5, wherein the first detector channel (1ch) and the second detector channel (2ch) are disposed at different positions in the width direction (Y-axis direction) of the transport path perpendicular to the transport direction (X-axis direction) of the medium (100).

7. The electromagnetic wave detection apparatus (1) according to any one of claims 1 to 6, wherein
the electromagnetic wave detection apparatus (1) is configured to detect characteristics of a predetermined type of resonator structure (110, 130, 71a, 71b), and
the first transmission element (11) and the second transmission element (11) are configured to transmit the first terahertz electromagnetic wave and the second terahertz electromagnetic wave, respectively, having a frequency at which the resonator structure (110, 130, 71a, 71b) of the predetermined type resonates with the first terahertz electromagnetic wave or the second terahertz electromagnetic wave and at which a ratio between a transmissivity of the resonator structure (110, 130, 71a, 71b) of the predetermined type irradiated with the first terahertz electromagnetic wave and a transmissivity of the resonator structure (110, 130, 71a, 71b) of the predetermined type irradiated with the second terahertz electromagnetic wave is greater than ratios at other frequencies.

8. The electromagnetic wave detection apparatus (1, 511) according to any one of claims 1 to 7, further comprising a plurality of the first detector channel (1ch, 3ch) and a plurality of the second detector channel (2ch, 4ch), and wherein the plurality of the first detector channel (1ch, 3ch), and the plurality of the second detector channel (2ch, 4ch) are alternately arrayed one by one in the width direction (Y-axis direction).

9. The electromagnetic wave detection apparatus (1, 511) according to any one of claims 1 to 8, wherein the first and second transmission elements (11) and the first and second reception elements (12) are arranged to transmit and receive the first terahertz electromagnetic wave and the second terahertz electromagnetic wave in a diagonal direction with respect to a medium plane of the medium (100).

10. The electromagnetic wave detection apparatus (1) according to claim 9, wherein
the first detector channel (1ch) is configured to apply to the medium (100) the first terahertz electromagnetic wave having the first polarization direction (X-direction) in a plane defined by the first polarization direction and the second polarization direction by irradiating the medium with a third terahertz electromagnetic wave having a third polarization direction (Z-direction), which is different from the first polarization direction (X-direction), in the diagonal direction with respect to a medium plane of the medium (100).

11. The electromagnetic wave detection apparatus (1) according to any one of claims 1 to 10, further comprising:
a transmission-side case (1a) in which the first and the second transmission elements (11) are arrayed; and
a reception-side case (2a) in which the first and the second reception elements (12) are arrayed,
wherein the transmission-side case (1a) and the reception-side case (2a) are disposed so as to oppose each other, and
the transmission-side case (1a) has a recessed part that is formed on a surface side opposing the reception-side case (2a) such that a terahertz electromagnetic wave (201) reflected by the medium (100) does not reach the first and the second reception elements (12) inside the reception-side case (2a).

12. The electromagnetic wave detection apparatus (511) according to any one of claims 1 to 10, further comprising:
a first case (1a) in which the first and the second transmission elements (11), and the first and the second reception elements (12) are disposed; and
a second case (2a) arranged opposing the first case (1a), wherein the second case (2a) has a recessed part that is formed on a surface side opposing the first case (1a) such that a terahertz electromagnetic wave (202) passed through the medium (100) does not reach the first and the second reception elements (12) inside the first case (1a).

13. The electromagnetic wave detection apparatus (511) according to claim 11 or 12, further comprising:
a transport unit (50) arranged to pass the medium (100) through a position that opposes the recessed part.

14. A medium inspection apparatus (101) comprising the electromagnetic wave detection apparatus (1, 511) according to any one of claims 1 to 13 and configured to perform inspection of a medium (100) by using the electromagnetic wave detection apparatus (1, 511), the medium inspection apparatus Z P (101) further comprising:
a memory (70) in which characteristics of a normal medium are stored as reference data, the characteristics being obtained in response to the first terahertz electromagnetic wave and the second terahertz electromagnetic wave being applied to the normal medium; wherein
the controller (60) is configured to determine whether or not a medium (100) passes inspection, based on a result of a comparison between the reference data in the memory (70) and characteristics obtained by the electromagnetic wave detection apparatus (1, 511).

15. A medium handling apparatus (101) comprising the electromagnetic wave detection apparatus (1, 511) according to any one of claims 1 to 13 and configured to recognize a medium (100) by using the electromagnetic wave detection apparatus (1, 511), the medium handling apparatus (101) further comprising:
a memory (70) in which characteristics of a genuine medium are stored as reference data, the characteristics being obtained in response to the first terahertz electromagnetic wave and the second terahertz electromagnetic wave being applied to the genuine medium; wherein
the controller (60) is configured to recognize an authenticity of the medium (100), based on a result of a comparison between the reference data in the memory (70) and characteristics obtained by the electromagnetic wave detection apparatus (1, 511) .

## Patentansprüche

1. Detektionsvorrichtung (1, 511) für elektromagnetische Wellen, die dazu konfiguriert ist, eine Charakteristik einer Resonatorstruktur (110, 130) zu erfassen, die aus einem Metamaterial hergestellt ist, das in einem Teil eines Mediums (100) gebildet ist, das in einer Transportrichtung (X-Achsenrichtung) transportiert wird, um eine vorbestimmte Position (P) zu passieren, wobei die Detektionsvorrichtung (1, 511) für elektromagnetische Wellen umfasst:
einen ersten Detektorkanal (1ch), der ein erstes Sendeelement (11) umfasst, das so konfiguriert ist, dass es eine erste elektromagnetische Terahertz-Welle mit einer ersten Polarisationsrichtung zu dem Medium (100) überträgt; und
ein erstes Empfangselement (12), das so konfiguriert ist, dass es die erste elektromagnetische Terahertz-Welle mit der ersten Polarisationsrichtung von dem Medium (100) empfängt;
einen zweiten Detektorkanal (2ch), der ein zweites Sendeelement (11) umfasst, das so konfiguriert ist, dass es eine zweite elektromagnetische Terahertz-Welle mit einer zweiten Polarisationsrichtung, die sich von der ersten Polarisationsrichtung unterscheidet, zu dem Medium (100) überträgt und
ein zweites Empfangselement (12), das so konfiguriert ist, dass es die zweite elektromagnetische Terahertz-Welle mit der zweiten Polarisationsrichtung von dem Medium (100) empfängt; und
eine Steuerung (60), die dazu konfiguriert ist, die Charakteristik der Resonatorstruktur des Mediums (100) aus Abschnitten der ersten elektromagnetischen Terahertz-Welle und der zweiten elektromagnetischen Terahertz-Welle zu erfassen, die von dem ersten Empfangselement (12) bzw. dem zweiten Empfangselement (12) empfangen wurden, **dadurch gekennzeichnet, dass**
der erste Detektorkanal (1ch) und der zweite Detektorkanal (2ch) entlang einer Breitenrichtung (Y-Achsenrichtung) der Transportstrecke senkrecht zur Transportrichtung (X-Achsenrichtung) angeordnet sind, so dass die erste elektromagnetische Terahertz-Welle und die zweite elektromagnetische Terahertz-Welle auf die Resonatorstruktur aufgebracht werden können, wenn das Medium (100) die vorbestimmte Position (P) passiert.

2. Detektionsvorrichtung (1, 511) für elektromagnetische Wellen nach Anspruch 1, die ferner mehrere erste Detektorkanäle (1ch, 3ch) und mehrere zweite Detektorkanäle (2ch, 4ch) aufweist, wobei die mehreren ersten Detektorkanäle (1ch) und die mehreren zweiten Detektorkanäle (2ch) in der Breitenrichtung (Y-Achsenrichtung) so angeordnet sind, dass die erste elektromagnetische Terahertz-Welle und die zweite elektromagnetische Terahertz-Welle auf eine gesamte Oberfläche des Mediums (100) aufgebracht werden können.

3. Detektionsvorrichtung (1, 511) für elektromagnetische Wellen nach Anspruch 1 oder 2, wobei
die Detektionsvorrichtung (1, 511) für elektromagnetische Wellen so konfiguriert ist, dass sie Charakteristika eines vorbestimmten Typs von Medium (100) detektiert, die einen ersten Bereich mit einer ersten Resonatorstruktur (71a) und einen zweiten Bereich mit einer zweiten Resonatorstruktur (71b) aufweisen, die unterschiedliche Charakteristika einer Durchlässigkeit für eine elektromagnetische Terahertz-Welle in Abhängigkeit von einer Polarisationsrichtung der elektromagnetischen Terahertz-Welle zeigen, und
die Steuerung (60) konfiguriert ist, um eine erste Charakteristik (61a) einer Durchlässigkeit des ersten Bereichs und des zweiten Bereichs bezüglich der ersten elektromagnetischen Terahertz-Welle und eine zweite Charakteristik (61b) einer Durchlässigkeit des ersten Bereichs und des zweiten Bereichs bezüglich der zweiten elektromagnetischen Terahertz-Welle zu erfassen.

4. Detektionsvorrichtung (1, 511) für elektromagnetische Wellen nach Anspruch 3, wobei die erste Charakteristik (61a) die Durchlässigkeit des ersten Bereichs angibt, die höher ist als die Durchlässigkeit des zweiten Bereichs, und die zweite Charakteristik (61b) die Durchlässigkeit des ersten Bereichs angibt, die niedriger ist als die Durchlässigkeit des zweiten Bereichs.

5. Detektionsvorrichtung (1, 511) für elektromagnetische Wellen nach einem der Ansprüche 1 bis 4, die ferner umfasst:
eine Transporteinheit (50), konfiguriert, um das Medium (100) in Transportrichtung (X-Achsenrichtung) entlang einer Transportstrecke zu bewegen, die mit einer Bestrahlungsbahn der ersten elektromagnetischen Terahertz-Welle und einer Bestrahlungsbahn der zweiten elektromagnetischen Terahertz-Welle zusammenfällt.

6. Detektionsvorrichtung für elektromagnetische Wellen (1, 511) nach einem der Ansprüche 1 bis 5, wobei der erste Detektorkanal (1ch) und der zweite Detektorkanal (2ch) in der Breitenrichtung (Y-Achsenrichtung) der Transportstrecke senkrecht zur Transportrichtung (X-Achsenrichtung) an unterschiedlichen Positionen des Mediums (100) angeordnet sind.

7. Detektionsvorrichtung (1, 511) für elektromagnetische Wellen nach einem der Ansprüche 1 bis 6, wobei
die Detektionsvorrichtung (1) für elektromagnetische Wellen konfiguriert ist, um Charakteristika eines vorbestimmten Typs von Resonatorstruktur (110, 130, 71a, 71b) zu detektieren, und
das erste Sendeelement (11) und das zweite Sendeelement (11) dazu konfiguriert sind, die erste elektromagnetische Terahertz-Welle bzw. die zweite elektromagnetische Terahertz-Welle mit einer Frequenz zu übertragen, bei der die Resonatorstruktur (110, 130, 71a, 71b) des vorbestimmten Typs mit der ersten elektromagnetischen Terahertz-Welle oder der zweite elektromagnetische Terahertz-Welle in Resonanz ist und bei der ein Verhältnis zwischen einer Durchlässigkeit der Resonatorstruktur (110, 130, 71a, 71b) des vorbestimmten Typs, die mit der ersten elektromagnetischen Terahertz-Welle bestrahlt wird, und einer Durchlässigkeit der Resonatorstruktur (110, 130, 71a, 71b) des vorbestimmten Typs, die mit der zweiten elektromagnetischen Terahertz-Welle bestrahlt wird, größer ist als Verhältnisse bei anderen Frequenzen.

8. Detektionsvorrichtung (1, 511) für elektromagnetische Wellen nach einem der Ansprüche 1 bis 7, die ferner mehrere erste Detektorkanäle (1ch, 3ch) und mehrere zweite Detektorkanäle (2ch, 4ch) aufweist, wobei die mehreren ersten Detektorkanäle (1ch, 3ch) und die mehreren zweiten Detektorkanäle (2ch, 4ch) abwechselnd einer nach dem anderen in der Breitenrichtung (Y-Achsenrichtung) angeordnet sind.

9. Detektionsvorrichtung (1, 511) für elektromagnetische Wellen nach einem der Ansprüche 1 bis 8, wobei die ersten und zweiten Sendeelemente (11) und die ersten und zweiten Empfangselemente (12) angeordnet sind, um die erste elektromagnetische Terahertz-Welle und die zweite elektromagnetische Terahertz-Welle in einer diagonalen Richtung in Bezug auf eine Mediumebene des Mediums (100)zu senden und zu empfangen.

10. Detektionsvorrichtung (1) für elektromagnetische Wellen nach Anspruch 9, wobei
der erste Detektorkanal (1ch) dazu konfiguriert ist, die erste elektromagnetische Terahertz-Welle mit der ersten Polarisationsrichtung (X-Richtung) in einer Ebene, die durch die erste Polarisationsrichtung und die zweite Polarisationsrichtung definiert ist, auf das Medium (100) aufzubringen, indem das Medium (100) mit einer dritten elektromagnetische Terahertz-Welle mit einer dritten Polarisationsrichtung (Z-Richtung) bestrahlt wird, die sich von der ersten Polarisationsrichtung (X-Richtung) unterscheidet, in der Diagonalrichtung in Bezug auf eine Mediumebene des Mediums (100).

11. Detektionsvorrichtung (1) für elektromagnetische Wellen nach einem der Ansprüche 1 bis 10, die ferner umfasst:
ein sendeseitiges Gehäuse (1a), in dem das erste und das zweite Sendeelement (11) angeordnet sind; und
ein empfangsseitiges Gehäuse (2a), in dem das erste und das zweite Empfangselement (12) angeordnet sind,
wobei das sendeseitige Gehäuse (1a) und das empfangsseitige Gehäuse (2a) so angeordnet sind, dass sie einander gegenüberliegen, und
das sendeseitige Gehäuse (1a) einen vertieften Teil aufweist, der auf einer dem empfangsseitigen Gehäuse (2a) gegenüberliegenden Oberflächenseite so ausgebildet ist, dass eine von dem Medium (100) reflektierte elektromagnetische Terahertz-Welle (201) das erste und das zweiten Empfangselement (12) innerhalb des empfangsseitigen Gehäuses (2a) nicht erreicht.

12. Detektionsvorrichtung (511) für elektromagnetische Wellen nach einem der Ansprüche 1 bis 10, die ferner umfasst:
ein erstes Gehäuse (1a), in dem das erste und das zweite Sendeelement (11) und das erste und das zweite Empfangselement (12) angeordnet sind; und
ein zweites Gehäuse (2a), das dem ersten Gehäuse (1a) gegenüber angeordnet ist, wobei das zweite Gehäuse (2a) einen vertieften Teil aufweist, der auf einer dem ersten Gehäuse (1a) gegenüberliegenden Oberflächenseite so ausgebildet ist, dass eine elektromagnetische Terahertz-Welle (202), die durch das Medium (100) durchgelassen wird, das erste und das zweite Empfangselement (12) innerhalb des ersten Gehäuses (1a) nicht erreicht.

13. Detektionsvorrichtung (511) für elektromagnetische Wellen nach Anspruch 11 oder 12, die ferner umfasst:
eine Transporteinheit (50), die angeordnet ist, um das Medium (100) durch eine Position zu führen, die dem vertieften Teil gegenüberliegt.

14. Medium-Inspektionsgerät (101), welches die Detektionsvorrichtung (1, 511) für elektromagnetische Wellen nach einem der Ansprüche 1 bis 13 umfasst und konfiguriert ist zum Durchführen einer Inspektion des Mediums (100) unter Verwendung der Vorrichtung (1, 511) zum Detektieren elektromagnetischer Wellen, wobei die Medium-Inspektionsvorrichtung (101) ferner folgendes umfasst:
einen Speicher (70), in dem Charakteristika eines normalen Mediums (100) als Referenzdaten gespeichert sind, wobei die Charakteristika als Reaktion auf die erste elektromagnetische Terahertz-Welle und die zweite elektromagnetische Terahertz-Welle erhalten werden, die auf das normale Medium (100) aufgebracht werden; wobei
die Steuerung (60) dazu konfiguriert ist, zu bestimmen, ob ein Medium (100) die Inspektion besteht oder nicht, basierend auf einem Ergebnis eines Vergleichs zwischen den Referenzdaten in dem Speicher (70) und Charakteristika, die durch die Detektionsvorrichtung (1, 511) für elektromagnetische Wellen erhalten werden.

15. Mediumhandhabungsvorrichtung (101), die die elektromagnetische Wellendetektionsvorrichtung (1, 511) nach einem der Ansprüche 1 bis 13 umfasst und dazu konfiguriert ist, ein Medium (100) unter Verwendung der elektromagnetischen Wellendetektionsvorrichtung (1, 511) zu erkennen, wobei die Mediumhandhabungsvorrichtung (101) ferner folgendes umfasst:
einen Speicher (70), in dem Charakteristika eines echten Mediums (100) als Referenzdaten gespeichert sind, wobei die Charakteristika als Reaktion auf die erste elektromagnetische Terahertz-Welle und die zweite elektromagnetische Terahertz-Welle erhalten werden, die auf das echte Medium (100) aufgebracht werden; wobei
die Steuerung (60) konfiguriert ist, um eine Authentizität des Mediums (100) zu erkennen, basierend auf einem Ergebnis eines Vergleichs zwischen den Referenzdaten in dem Speicher (70) und Charakteristika, die durch die Erfassungsvorrichtung (1, 511) für elektromagnetische Wellen erhalten werden.

## Revendications

1. Appareil de détection d'ondes électromagnétiques (1, 511) configuré pour détecter une caractéristique d'une structure de résonateur (110, 130) constituée d'un métamatériau formé dans une partie d'un média (100) transporté dans une direction de transport (direction de l'axe X) pour passer une position prédéterminée (P), l'appareil de détection d'ondes électromagnétiques (1, 511) comprenant :
un premier canal de détecteur (1ch) comprenant un premier élément de transmission (11) configuré pour transmettre une première onde électromagnétique térahertz ayant une première direction de polarisation au média (100) et un premier élément de réception (12) configuré pour recevoir la première onde électromagnétique térahertz ayant la première direction de polarisation depuis le média (100) ;
un deuxième canal de détecteur (2ch) comprenant un deuxième élément de transmission (11) configuré pour transmettre une deuxième onde électromagnétique térahertz ayant une deuxième direction de polarisation différente de la première direction de polarisation au média (100) et un deuxième élément de réception (12) configuré pour recevoir la deuxième onde électromagnétique térahertz ayant la deuxième direction de polarisation depuis le média (100) ; et
un contrôleur (60) configuré pour détecter la caractéristique de la structure de résonateur (110, 130) du média (100) à partir de parties de la première onde électromagnétique térahertz et de la deuxième onde électromagnétique térahertz qui ont été reçues par le premier élément de réception (12) et le deuxième élément de réception (12) respectivement, **caractérisé en ce que**
le premier canal de détection (1ch) et le deuxième canal de détection (2ch) sont agencés le long d'une direction de la largeur (direction de l'axe Y) du trajet de transport perpendiculaire à la direction de transport (direction de l'axe X) de sorte que la première onde électromagnétique térahertz et la deuxième onde électromagnétique térahertz peuvent être appliquées à la structure de résonateur (110, 130) lorsque le média (100) passe la position prédéterminée (P).

2. Appareil de détection d'ondes électromagnétiques (1, 511) selon la revendication 1, comprenant en outre une pluralité du premier canal de détecteur (1ch, 3ch) et une pluralité du deuxième canal de détecteur (2ch, 4ch), et dans lequel la pluralité du premier canal de détecteur (1ch, 3ch) et la pluralité du deuxième canal de détecteur (2ch, 4ch) sont disposés dans la direction de la largeur (direction de l'axe Y), de sorte que la première onde électromagnétique térahertz et la deuxième onde électromagnétique térahertz peuvent être appliquées sur toute la surface du média (100).

3. Appareil de détection d'ondes électromagnétiques (1, 511) selon la revendication 1 ou 2, dans lequel
l'appareil de détection d'ondes électromagnétiques (1, 511) est configuré pour détecter des caractéristiques d'un type prédéterminé de média (100) comprenant une première région ayant une première structure de résonateur (71a) et une deuxième région ayant une deuxième structure de résonateur (71b) qui présentent différentes caractéristiques sur une transmissivité d'une onde électromagnétique térahertz en fonction d'une direction de polarisation de l'onde électromagnétique térahertz, et
le contrôleur (60) est configuré pour détecter une première caractéristique (61a) sur une transmissivité de la première onde électromagnétique térahertz de la première région et de la deuxième région, et une deuxième caractéristique (61b) sur une transmissivité de la deuxième onde électromagnétique térahertz de la première région et de la deuxième région.

4. Appareil de détection d'ondes électromagnétiques (1, 511) selon la revendication 3, dans lequel la première caractéristique (61a) indique la transmissivité de la première région supérieure à la transmissivité de la deuxième région, et la deuxième caractéristique (61b) indique la transmissivité de la première région inférieure à la transmissivité de la deuxième région.

5. Appareil de détection d'ondes électromagnétiques (1, 511) selon l'une quelconque des revendications 1 à 4, comprenant en outre :
une unité de transport (50) configurée pour déplacer le média (100) dans la direction de transport (direction de l'axe X) le long d'un trajet de transport qui coïncide avec un trajet d'irradiation de la première onde électromagnétique térahertz et un trajet d'irradiation de la deuxième onde électromagnétique térahertz.

6. Appareil de détection d'ondes électromagnétiques (1, 511) selon l'une quelconque des revendications 1 à 5, dans lequel le premier canal de détecteur (1ch) et le deuxième canal de détecteur (2ch) sont disposés à des positions différentes dans la direction de la largeur (direction de l'axe Y) du trajet de transport perpendiculaire à la direction de transport (direction de l'axe X) du média (100).

7. Appareil de détection d'ondes électromagnétiques (1) selon l'une quelconque des revendications 1 à 6, dans lequel
l'appareil de détection d'ondes électromagnétiques (1) est configuré pour détecter des caractéristiques d'un type prédéterminé de structure de résonateur (110, 130, 71a, 71b), et
le premier élément de transmission (11) et le deuxième élément de transmission (11) sont configurés pour transmettre la première onde électromagnétique térahertz et la deuxième onde électromagnétique térahertz, respectivement, ayant une fréquence à laquelle la structure de résonateur (110, 130, 71a, 71b) du type prédéterminé résonne avec la première onde électromagnétique térahertz ou la deuxième onde électromagnétique térahertz et à laquelle un rapport entre une transmissivité de la structure de résonateur (110, 130, 71a, 71b) du type prédéterminé irradiée avec la première onde électromagnétique térahertz et une transmissivité de la structure de résonateur (110, 130, 71a, 71b) du type prédéterminé irradiée avec la deuxième onde électromagnétique térahertz est plus élevé que les rapports à d'autres fréquences.

8. Appareil de détection d'ondes électromagnétiques (1, 511) selon l'une quelconque des revendications 1 à 7, comprenant en outre une pluralité du premier canal de détecteur (1ch, 3ch) et une pluralité du deuxième canal de détecteur (2ch, 4ch), et dans lequel la pluralité du premier canal de détecteur (1ch, 3ch) et la pluralité du deuxième canal de détecteur (2ch, 4ch) sont disposés en alternance un par un dans la direction de la largeur (direction de l'axe Y).

9. Appareil de détection d'ondes électromagnétiques (1, 511) selon l'une quelconque des revendications 1 à 8, dans lequel les premier et deuxième éléments de transmission (11) et les premier et deuxième éléments de réception (12) sont agencés pour émettre et recevoir la première onde électromagnétique térahertz et la deuxième onde électromagnétique térahertz dans une direction diagonale par rapport à un plan médian du média (100).

10. Appareil de détection d'ondes électromagnétiques (1) selon la revendication 9, dans lequel
le premier canal de détecteur (1ch) est configuré pour appliquer au média (100), la première onde électromagnétique térahertz ayant la première direction de polarisation (direction X) dans un plan défini par la première direction de polarisation et la deuxième direction de polarisation en irradiant le média avec une troisième onde électromagnétique térahertz ayant une troisième direction de polarisation (direction Z), qui est différente de la première direction de polarisation (direction X), dans la direction diagonale par rapport à un plan médian du média (100).

11. Appareil de détection d'ondes électromagnétiques (1) selon l'une quelconque des revendications 1 à 10, comprenant en outre :
un boîtier côté transmission (la) dans lequel les premier et deuxième éléments de transmission (11) sont disposés ; et
un boîtier côté réception (2a) dans lequel les premier et deuxième éléments de réception (12) sont disposés,
dans lequel le boîtier côté transmission (1a) et le boîtier côté réception (2a) sont disposés de manière à s'opposer l'un à l'autre, et
le boîtier côté transmission (1a) a une partie évidée qui est formée sur un côté de surface opposé au boîtier côté réception (2a) de sorte qu'une onde électromagnétique térahertz (201) réfléchie par le média (100) n'atteint pas les premier et deuxième éléments de réception (12) à l'intérieur du boîtier côté réception (2a).

12. Appareil de détection d'ondes électromagnétiques (511) selon l'une quelconque des revendications 1 à 10, comprenant en outre :
un premier boîtier (1a) dans lequel les premier et deuxième éléments de transmission (11), et les premier et deuxième éléments de réception (12) sont disposés ; et
un deuxième boîtier (2a) disposé à l'opposé du premier boîtier (1a), dans lequel le deuxième boîtier (2a) a une partie évidée qui est formée sur un côté de surface opposé au premier boîtier (1a) de sorte qu'une onde électromagnétique térahertz (202) passé à travers le média (100) n'atteint pas les premier et deuxième éléments de réception (12) à l'intérieur du premier boîtier (1a).

13. Appareil de détection d'ondes électromagnétiques (511) selon la revendication 11 ou 12, comprenant en outre :
une unité de transport (50) agencée pour faire passer le média (100) à travers une position qui s'oppose à la partie évidée.

14. Appareil d'inspection des médias (101) comprenant l'appareil de détection d'ondes électromagnétiques (1, 511) selon l'une quelconque des revendications 1 à 13 et configuré pour effectuer l'inspection d'un média (100) en utilisant l'appareil de détection d'ondes électromagnétiques (1, 511), l'appareil d'inspection de média (101) comprenant en outre :
une mémoire (70) dans laquelle les caractéristiques d'un média normal sont stockées en tant que données de référence, les caractéristiques étant obtenues en réponse à la première onde électromagnétique térahertz et la deuxième onde électromagnétique térahertz étant appliquées au média normal ; dans lequel
le contrôleur (60) est configuré pour déterminer si oui ou non un média (100) réussit l'inspection, sur la base d'un résultat d'une comparaison entre les données de référence dans la mémoire (70) et les caractéristiques obtenues par l'appareil de détection d'ondes électromagnétiques (1, 511).

15. Appareil de gestion des médias (101) comprenant l'appareil de détection d'ondes électromagnétiques (1, 511) selon l'une quelconque des revendications 1 à 13 et configuré pour reconnaître un média (100) en utilisant l'appareil de détection d'ondes électromagnétiques (1, 511), l'appareil de gestion des médias (101) comprenant en outre :
une mémoire (70) dans laquelle les caractéristiques d'un média authentique sont stockées en tant que données de référence, les caractéristiques étant obtenues en réponse à la première onde électromagnétique térahertz et la deuxième onde électromagnétique térahertz étant appliquées au média authentique ; dans lequel
le contrôleur (60) est configuré pour reconnaître une authenticité du média (100), sur la base d'un résultat d'une comparaison entre les données de référence dans la mémoire (70) et les caractéristiques obtenues par l'appareil de détection d'ondes électromagnétiques (1, 511).
